# EUROPEAN PATENT APPLICATION

(11) **EP 4 061 050 A1**
(43) Date of publication of application: **21.09.2022**
(21) Application number: 20903999.9
(22) Date of filing: 11.11.2020
(51) Int. Cl.: H04W 28/06

(54) **SIGNAL INTERFERENCE COORDINATION METHOD, COMMUNICATION APPARATUS AND COMPUTER-READABLE STORAGE MEDIUM**

(30) Priority: 16.12.2019 CN 201911296272
(71) Applicant: Huawei Technologies Co., Ltd., Shenzhen, Guangdong 518129 (CN)
(72) Inventor: YU, Rongdao, Shenzhen, Guangdong 518129 (CN)
(74) Representative: MERH-IP Matias Erny Reichl Hoffmann Patentanwälte PartG mbB
(86) International application number: PCT/CN2020/127946
(87) International publication number: WO 2021/120926

(57) **Abstract**

Embodiments of this application provide a signal interference coordination method, a communication apparatus, and a computer-readable storage medium. Uplink OAM mode information corresponding to a first terminal device in a first cell is different from uplink OAM mode information corresponding to at least one second terminal device in a second cell, so that an OAM wave used by the first terminal device to send uplink data and an OAM wave used by the at least one second terminal device to send uplink data are orthogonal to each other. In this way, mutual interference between uplink data of adjacent terminal devices that belong to different cells is avoided. Downlink OAM mode information corresponding to the first terminal device in the first cell is different from downlink OAM mode information corresponding to the at least one second terminal device in the second cell, so that OAM waves used by different network devices in adjacent cells to send downlink data are orthogonal to each other. In this way, mutual interference between the downlink data of the adjacent cells is avoided, and reliability of signal transmission is improved.

## Description

This application claims priority to Chinese Patent Application No. 201911296272.X, filed with the China National Intellectual Property Administration on December 16, 2019 and entitled "SIGNAL INTERFERENCE COORDINATION METHOD, COMMUNICATION APPARATUS, AND COMPUTER-READABLE STORAGE MEDIUM", which is incorporated herein by reference in its entirety.

### TECHNICAL FIELD

This application relates to the field of communication technologies, and in particular, to a signal interference coordination method, a communication apparatus, and a computer-readable storage medium.

### BACKGROUND

In an orbital angular momentum (Orbital Angular Momentum, OAM) communication system, a network device uses an OAM wave to send downlink data to a terminal device, and the terminal device uses an OAM wave to send uplink data to the network device.

In the conventional technology, network devices in adjacent cells send downlink data to edge terminal devices in their respective cells by using OAM waves of a same OAM mode. Consequently, the downlink data of the adjacent cells interferes with each other. Similarly, if the edge terminal devices in the adjacent cells send uplink data to their respective network devices by using OAM waves of a same OAM mode, the uplink data of the adjacent cells also interferes with each other. Consequently, reliability of signal transmission is reduced, and a data transmission error is caused.

### SUMMARY

This application provides a signal interference coordination method, a communication apparatus, and a computer-readable storage medium, to avoid mutual interference between data of adjacent cells and improve reliability of signal transmission.

According to a first aspect, this application provides a signal interference coordination method. The method includes: A first terminal device obtains uplink OAM mode information and/or downlink OAM mode information; and sends uplink data based on an uplink OAM mode corresponding to the uplink OAM mode information, and/or receives downlink data based on a downlink OAM mode corresponding to the downlink OAM mode information. The uplink OAM mode information corresponding to the first terminal device is different from uplink OAM mode information corresponding to at least one second terminal device, the downlink OAM mode information corresponding to the first terminal device is different from downlink OAM mode information corresponding to the at least one second terminal device, the first terminal device is in a first cell, the at least one second terminal device is in a second cell, and the first terminal device is adjacent to the at least one second terminal device. According to the solution provided in this embodiment, mutual interference between uplink data of adjacent terminal devices that belong to different cells is avoided, and/or mutual interference between downlink data of adjacent cells is avoided. In this way, reliability of signal transmission is improved and a data transmission error is avoided.

In a possible design, uplink OAM mode information corresponding to at least one third terminal device adjacent to the first terminal device in the first cell is different from or the same as the uplink OAM mode information corresponding to the first terminal device, and downlink OAM mode information corresponding to the at least one third terminal device is different from or the same as the downlink OAM mode information corresponding to the first terminal device. According to the solution provided in this embodiment, signal interference between different terminal devices in a same cell can be avoided, reliability of signal transmission in the same cell is improved, and a data transmission error is avoided.

In a possible design, uplink OAM mode information corresponding to at least one third terminal device adjacent to the first terminal device in the first cell is different from or the same as the downlink OAM mode information corresponding to the first terminal device, and downlink OAM mode information corresponding to the at least one third terminal device is different from or the same as the uplink OAM mode information corresponding to the first terminal device. According to the solution provided in this embodiment, signal interference between different terminal devices in a same cell can be avoided, reliability of signal transmission in the same cell is improved, and a data transmission error is avoided.

In a possible design, uplink OAM mode information corresponding to at least one third terminal device adjacent to the first terminal device in the first cell and the uplink OAM mode information corresponding to the first terminal device form a first set, and the uplink OAM mode information corresponding to the at least one second terminal device forms a second set; or downlink OAM mode information corresponding to at least one third terminal device and the downlink OAM mode information corresponding to the first terminal device form a first set, and the downlink OAM mode information corresponding to the at least one second terminal device forms a second set. The OAM mode information in the first set is consecutive; or the OAM mode information in the first set is discrete; or the OAM mode information in the first set is partially consecutive and partially discrete.

In a possible design, the uplink OAM mode information corresponding to the first terminal device is different from the downlink OAM mode information corresponding to the at least one second terminal device, and the downlink OAM mode information corresponding to the first terminal device is different from the uplink OAM mode information corresponding to the at least one second terminal device. According to the solution provided in this embodiment, mutual interference between uplink data and downlink data of adjacent cells is avoided, and reliability of signal transmission is further improved.

In a possible design, uplink OAM mode information corresponding to at least one third terminal device adjacent to the first terminal device in the first cell and the uplink OAM mode information corresponding to the first terminal device form a first set, and the downlink OAM mode information corresponding to the at least one second terminal device forms a second set; or downlink OAM mode information corresponding to at least one third terminal device and the downlink OAM mode information corresponding to the first terminal device form a first set, and the uplink OAM mode information corresponding to the at least one second terminal device forms a second set. The OAM mode information in the first set is consecutive; or the OAM mode information in the first set is discrete; or the OAM mode information in the first set is partially consecutive and partially discrete. According to the solution provided in this embodiment, mutual interference between uplink data and downlink data of adjacent cells is avoided, and reliability of signal transmission is further improved.

In a possible design, when there are a plurality of intervals between adjacent OAM mode information in the first set, the plurality of intervals are the same, or the plurality of intervals are different, or the plurality of intervals are partially the same and partially different. According to the solution provided in this embodiment, flexibility of the OAM mode information in the first set is improved.

In a possible design, when the OAM mode information in the first set is partially consecutive and partially discrete, a plurality of consecutive OAM mode information subsets in the first set are discrete. According to the solution provided in this embodiment, flexibility of the OAM mode information in the first set is improved.

In a possible design, the first set includes mutually-symmetric OAM mode information. According to the solution provided in this embodiment, phases of OAM waves corresponding to the mutually-symmetric OAM mode information are exactly opposite. In other words, wavefront phases are exactly directionally-symmetric. In this way, implementation complexity can be reduced, good orthogonality can be ensured, and signal interference between edge terminal devices in a cell can be further reduced.

In a possible design, when the OAM mode information in the first set is consecutive, and the OAM mode information in the second set is consecutive, an interval between the first set and the second set is greater than or equal to a preset interval. According to the solution provided in this embodiment, energy leakage between OAM waves separately used by terminal devices that belong to different cells and are adjacent to each other in adjacent cells can be reduced, and signal interference between the terminal devices that belong to different cells and are adjacent to each other in the adjacent cells can be further reduced.

In a possible design, the first set is a subset of a third set, and the third set is a set of uplink OAM mode information or downlink OAM mode information corresponding to edge terminal devices in the first cell.

In a possible design, the third set is a subset of a set of uplink OAM mode information supported by the first cell, or the third set is a subset of a set of downlink OAM mode information supported by the first cell.

According to a second aspect, this application provides a signal interference coordination method. The method includes: A network device obtains uplink OAM mode information and/or downlink OAM mode information corresponding to a first terminal device; and sends, to the first terminal device, the uplink OAM mode information and/or the downlink OAM mode information corresponding to the first terminal device. The uplink OAM mode information corresponding to the first terminal device is used by the first terminal device to send uplink data, and the downlink OAM mode information corresponding to the first terminal device is used by the first terminal device to receive downlink data. The uplink OAM mode information corresponding to the first terminal device is different from uplink OAM mode information corresponding to at least one second terminal device, the downlink OAM mode information corresponding to the first terminal device is different from downlink OAM mode information corresponding to the at least one second terminal device, the first terminal device is in a first cell, the at least one second terminal device is in a second cell, and the first terminal device is adjacent to the at least one second terminal device. According to the solution provided in this embodiment, mutual interference between uplink data of adjacent terminal devices that belong to different cells is avoided, and/or mutual interference between downlink data of adjacent cells is avoided. In this way, reliability of signal transmission is improved and a data transmission error is avoided.

In a possible design, uplink OAM mode information corresponding to at least one third terminal device adjacent to the first terminal device in the first cell is different from or the same as the uplink OAM mode information corresponding to the first terminal device, and downlink OAM mode information corresponding to the at least one third terminal device is different from or the same as the downlink OAM mode information corresponding to the first terminal device. According to the solution provided in this embodiment, signal interference between different terminal devices in a same cell can be avoided, reliability of signal transmission in the same cell is improved, and a data transmission error is avoided.

In a possible design, uplink OAM mode information corresponding to at least one third terminal device adjacent to the first terminal device in the first cell is different from or the same as the downlink OAM mode information corresponding to the first terminal device, and downlink OAM mode information corresponding to the at least one third terminal device is different from or the same as the uplink OAM mode information corresponding to the first terminal device. According to the solution provided in this embodiment, signal interference between different terminal devices in a same cell can be avoided, reliability of signal transmission in the same cell is improved, and a data transmission error is avoided.

In a possible design, uplink OAM mode information corresponding to at least one third terminal device adjacent to the first terminal device in the first cell and the uplink OAM mode information corresponding to the first terminal device form a first set, and the uplink OAM mode information corresponding to the at least one second terminal device forms a second set; or downlink OAM mode information corresponding to at least one third terminal device and the downlink OAM mode information corresponding to the first terminal device form a first set, and the downlink OAM mode information corresponding to the at least one second terminal device forms a second set. The OAM mode information in the first set is consecutive; or the OAM mode information in the first set is discrete; or the OAM mode information in the first set is partially consecutive and partially discrete.

In a possible design, the uplink OAM mode information corresponding to the first terminal device is different from the downlink OAM mode information corresponding to the at least one second terminal device, and the downlink OAM mode information corresponding to the first terminal device is different from the uplink OAM mode information corresponding to the at least one second terminal device. According to the solution provided in this embodiment, mutual interference between uplink data and downlink data of adjacent cells is avoided, and reliability of signal transmission is further improved.

In a possible design, uplink OAM mode information corresponding to at least one third terminal device adjacent to the first terminal device in the first cell and the uplink OAM mode information corresponding to the first terminal device form a first set, and the downlink OAM mode information corresponding to the at least one second terminal device forms a second set; or downlink OAM mode information corresponding to at least one third terminal device and the downlink OAM mode information corresponding to the first terminal device form a first set, and the uplink OAM mode information corresponding to the at least one second terminal device forms a second set. The OAM mode information in the first set is consecutive; or the OAM mode information in the first set is discrete; or the OAM mode information in the first set is partially consecutive and partially discrete. According to the solution provided in this embodiment, mutual interference between uplink data and downlink data of adjacent cells is avoided, and reliability of signal transmission is further improved.

In a possible design, when there are a plurality of intervals between adjacent OAM mode information in the first set, the plurality of intervals are the same, or the plurality of intervals are different, or the plurality of intervals are partially the same and partially different. According to the solution provided in this embodiment, flexibility of the OAM mode information in the first set is improved.

In a possible design, when the OAM mode information in the first set is partially consecutive and partially discrete, a plurality of consecutive OAM mode information subsets in the first set are discrete. According to the solution provided in this embodiment, flexibility of the OAM mode information in the first set is improved.

In a possible design, the first set includes mutually-symmetric OAM mode information. According to the solution provided in this embodiment, phases of OAM waves corresponding to the mutually-symmetric OAM mode information are exactly opposite. In other words, wavefront phases are exactly directionally-symmetric. In this way, implementation complexity can be reduced, good orthogonality can be ensured, and signal interference between edge terminal devices in a cell can be further reduced.

In a possible design, when the OAM mode information in the first set is consecutive and the OAM mode information in the second set is consecutive, an interval between the first set and the second set is greater than or equal to a preset interval. According to the solution provided in this embodiment, energy leakage between OAM waves separately used by terminal devices that belong to different cells and are adjacent to each other in adjacent cells can be reduced, and signal interference between the terminal devices that belong to different cells and are adjacent to each other in the adjacent cells can be further reduced.

In a possible design, the first set is a subset of a third set, and the third set is a set of uplink OAM mode information or downlink OAM mode information corresponding to edge terminal devices in the first cell.

In a possible design, the third set is a subset of a set of uplink OAM mode information supported by the first cell, or the third set is a subset of a set of downlink OAM mode information supported by the first cell.

According to a third aspect, this application provides a signal interference coordination method. The method includes: A first terminal device obtains uplink OAM mode information and/or downlink OAM mode information; and sends uplink data based on an uplink OAM mode corresponding to the uplink OAM mode information, and/or receives downlink data based on a downlink OAM mode corresponding to the downlink OAM mode information. The uplink OAM mode information corresponding to the first terminal device is different from downlink OAM mode information corresponding to at least one second terminal device, the downlink OAM mode information corresponding to the first terminal device is different from uplink OAM mode information corresponding to the at least one second terminal device, the first terminal device is in a first cell, the at least one second terminal device is in a second cell, and the first terminal device is adjacent to the at least one second terminal device. According to the solution provided in this embodiment, mutual interference between uplink data and downlink data of adjacent cells is avoided. In this way, reliability of signal transmission is improved and a data transmission error is avoided.

In a possible design, uplink OAM mode information corresponding to at least one third terminal device adjacent to the first terminal device in the first cell is different from or the same as the uplink OAM mode information corresponding to the first terminal device, and downlink OAM mode information corresponding to the at least one third terminal device is different from or the same as the downlink OAM mode information corresponding to the first terminal device. According to the solution provided in this embodiment, signal interference between different terminal devices in a same cell can be avoided, reliability of signal transmission in the same cell is improved, and a data transmission error is avoided.

In a possible design, uplink OAM mode information corresponding to at least one third terminal device adjacent to the first terminal device in the first cell is different from or the same as the downlink OAM mode information corresponding to the first terminal device, and downlink OAM mode information corresponding to the at least one third terminal device is different from or the same as the uplink OAM mode information corresponding to the first terminal device. According to the solution provided in this embodiment, signal interference between different terminal devices in a same cell can be avoided, reliability of signal transmission in the same cell is improved, and a data transmission error is avoided.

In a possible design, uplink OAM mode information corresponding to at least one third terminal device adjacent to the first terminal device in the first cell and the uplink OAM mode information corresponding to the first terminal device form a first set, and the downlink OAM mode information corresponding to the at least one second terminal device forms a second set; or downlink OAM mode information corresponding to at least one third terminal device and the downlink OAM mode information corresponding to the first terminal device form a first set, and the uplink OAM mode information corresponding to the at least one second terminal device forms a second set. The OAM mode information in the first set is consecutive; or the OAM mode information in the first set is discrete; or the OAM mode information in the first set is partially consecutive and partially discrete.

In a possible design, when there are a plurality of intervals between adjacent OAM mode information in the first set, the plurality of intervals are the same, or the plurality of intervals are different, or the plurality of intervals are partially the same and partially different. According to the solution provided in this embodiment, flexibility of the OAM mode information in the first set is improved.

In a possible design, when the OAM mode information in the first set is partially consecutive and partially discrete, a plurality of consecutive OAM mode information subsets in the first set are discrete. According to the solution provided in this embodiment, flexibility of the OAM mode information in the first set is improved.

In a possible design, the first set includes mutually-symmetric OAM mode information. According to the solution provided in this embodiment, phases of OAM waves corresponding to the mutually-symmetric OAM mode information are exactly opposite. In other words, wavefront phases are exactly directionally-symmetric. In this way, implementation complexity can be reduced, good orthogonality can be ensured, and signal interference between edge terminal devices in a cell can be further reduced.

In a possible design, when the OAM mode information in the first set is consecutive, and the OAM mode information in the second set is consecutive, an interval between the first set and the second set is greater than or equal to a preset interval. According to the solution provided in this embodiment, energy leakage between OAM waves separately used by terminal devices that belong to different cells and are adjacent to each other in adjacent cells can be reduced, and signal interference between the terminal devices that belong to the different cells and are adjacent to each other in the adjacent cells can be further reduced.

In a possible design, the first set is a subset of a third set, and the third set is a set of uplink OAM mode information or downlink OAM mode information corresponding to edge terminal devices in the first cell.

In a possible design, the third set is a subset of a set of uplink OAM mode information supported by the first cell, or the third set is a subset of a set of downlink OAM mode information supported by the first cell.

According to a fourth aspect, this application provides a signal interference coordination method. The method includes: A network device obtains uplink OAM mode information and/or downlink OAM mode information corresponding to a first terminal device; and sends, to the first terminal device, the uplink OAM mode information and/or the downlink OAM mode information corresponding to the first terminal device. The uplink OAM mode information corresponding to the first terminal device is used by the first terminal device to send uplink data, and the downlink OAM mode information corresponding to the first terminal device is used by the first terminal device to receive downlink data. The uplink OAM mode information corresponding to the first terminal device is different from downlink OAM mode information corresponding to at least one second terminal device, the downlink OAM mode information corresponding to the first terminal device is different from uplink OAM mode information corresponding to the at least one second terminal device, the first terminal device is in a first cell, the at least one second terminal device is in a second cell, and the first terminal device is adjacent to the at least one second terminal device. According to the solution provided in this embodiment, mutual interference between uplink data and downlink data of adjacent cells is avoided. In this way, reliability of signal transmission is improved and a data transmission error is avoided.

In a possible design, uplink OAM mode information corresponding to at least one third terminal device adjacent to the first terminal device in the first cell is different from or the same as the uplink OAM mode information corresponding to the first terminal device, and downlink OAM mode information corresponding to the at least one third terminal device is different from or the same as the downlink OAM mode information corresponding to the first terminal device. According to the solution provided in this embodiment, signal interference between different terminal devices in a same cell can be avoided, reliability of signal transmission in the same cell is improved, and a data transmission error is avoided.

In a possible design, uplink OAM mode information corresponding to at least one third terminal device adjacent to the first terminal device in the first cell is different from or the same as the downlink OAM mode information corresponding to the first terminal device, and downlink OAM mode information corresponding to the at least one third terminal device is different from or the same as the uplink OAM mode information corresponding to the first terminal device. According to the solution provided in this embodiment, signal interference between different terminal devices in a same cell can be avoided, reliability of signal transmission in the same cell is improved, and a data transmission error is avoided.

In a possible design, uplink OAM mode information corresponding to at least one third terminal device adjacent to the first terminal device in the first cell and the uplink OAM mode information corresponding to the first terminal device form a first set, and the downlink OAM mode information corresponding to the at least one second terminal device forms a second set; or downlink OAM mode information corresponding to at least one third terminal device and the downlink OAM mode information corresponding to the first terminal device form a first set, and the uplink OAM mode information corresponding to the at least one second terminal device forms a second set. The OAM mode information in the first set is consecutive; or the OAM mode information in the first set is discrete; or the OAM mode information in the first set is partially consecutive and partially discrete.

In a possible design, when there are a plurality of intervals between adjacent OAM mode information in the first set, the plurality of intervals are the same, or the plurality of intervals are different, or the plurality of intervals are partially the same and partially different. According to the solution provided in this embodiment, flexibility of the OAM mode information in the first set is improved.

In a possible design, when the OAM mode information in the first set is partially consecutive and partially discrete, a plurality of consecutive OAM mode information subsets in the first set are discrete. According to the solution provided in this embodiment, flexibility of the OAM mode information in the first set is improved.

In a possible design, the first set includes mutually-symmetric OAM mode information. According to the solution provided in this embodiment, phases of OAM waves corresponding to the mutually-symmetric OAM mode information are exactly opposite. In other words, wavefront phases are exactly directionally-symmetric. In this way, implementation complexity can be reduced, good orthogonality can be ensured, and signal interference between edge terminal devices in a cell can be further reduced.

In a possible design, when the OAM mode information in the first set is consecutive, and the OAM mode information in the second set is consecutive, an interval between the first set and the second set is greater than or equal to a preset interval. According to the solution provided in this embodiment, energy leakage between OAM waves separately used by terminal devices that belong to different cells and are adjacent to each other in adjacent cells can be reduced, and signal interference between the terminal devices that belong to the different cells and are adjacent to each other in the adjacent cells can be further reduced.

In a possible design, the first set is a subset of a third set, and the third set is a set of uplink OAM mode information or downlink OAM mode information corresponding to edge terminal devices in the first cell.

In a possible design, the third set is a subset of a set of uplink OAM mode information supported by the first cell, or the third set is a subset of a set of downlink OAM mode information supported by the first cell.

According to a fifth aspect, this application provides a communication apparatus. The communication apparatus includes a module, a component, or a circuit configured to implement the method according to the first aspect, the second aspect, the third aspect, or the fourth aspect.

According to a sixth aspect, this application provides a communication apparatus. The communication apparatus includes: an interface and a processor, where the interface is coupled to the processor; and the processor is configured to execute a computer program or instructions in a memory, so that the method according to the first aspect, the second aspect, the third aspect, or the fourth aspect is performed.

In a possible design, the communication apparatus in the sixth aspect may be a terminal device or a network device, or may be a chip. The interface and the processor may be integrated on a same chip, or may be separately disposed on different chips.

In a possible design, the communication apparatus in the sixth aspect may further include the memory, and the memory is configured to store the computer program or the instructions. The memory and the processor are integrated on a same chip, or may be separately disposed on different chips.

According to a seventh aspect, this application provides a communication apparatus. The communication apparatus includes: a processor and a transceiver, where the processor and the transceiver communicate with each other through an internal connection; the processor is configured to execute a computer program or instructions in a memory, so that the method according to the first aspect, the second aspect, the third aspect, or the fourth aspect is performed; and the transceiver is configured to perform receiving and sending steps in the method according to the first aspect, the second aspect, the third aspect, or the fourth aspect.

In a possible design, the communication apparatus in the seventh aspect may be a network device or a terminal device, or may be a component (for example, a chip or a circuit) of a network device or a terminal device.

According to an eighth aspect, this application provides a communication apparatus. The communication apparatus includes a processor and a memory, where the processor is coupled to the memory; the memory is configured to store a computer program or instructions; and the processor is configured to execute the computer program or the instructions stored in the memory, so that the communication apparatus performs the method according to the first aspect, the second aspect, the third aspect, or the fourth aspect.

According to a ninth aspect, this application provides a communication apparatus. The communication apparatus includes a processor, a memory, and a transceiver, where the memory is configured to store a computer program or instructions; and the processor is configured to execute the computer program or the instructions stored in the memory, so that the communication apparatus performs the method according to the first aspect, the second aspect, the third aspect, or the fourth aspect.

According to a tenth aspect, this application provides a communication apparatus. The communication apparatus includes an input interface circuit, a logic circuit, and an output interface circuit. The input interface circuit is configured to obtain to-be-processed data; the logic circuit is configured to perform the method according to the first aspect, the second aspect, the third aspect, or the fourth aspect to process the to-be-processed data, to obtain processed data; and the output interface circuit is configured to output the processed data.

According to an eleventh aspect, this application provides a computer-readable storage medium. The computer-readable storage medium includes a computer program or instructions. When the computer program or the instructions is/are run on a computer, the method according to the first aspect, the second aspect, the third aspect, or the fourth aspect is performed.

According to a twelfth aspect, this application provides a computer program. The computer program includes a program or instructions. When the program or the instructions is/are run on a computer, the method according to the first aspect, the second aspect, the third aspect, or the fourth aspect is performed.

In a possible design, all or a part of the computer program in the twelfth aspect may be stored in a storage medium encapsulated with a processor, or a part or all of the computer program may be stored in a memory that is not encapsulated with a processor.

According to a thirteenth aspect, this application provides a computer program product. The computer program product includes a computer program or instructions. When the computer program or the instructions is/are run on a computer, the method according to the first aspect, the second aspect, the third aspect, or the fourth aspect is performed.

According to a fourteenth aspect, an embodiment of this application further provides a system. The system includes the network device and the terminal device (for example, a first terminal device, a second terminal device, and a third terminal device) according to the first aspect, the second aspect, the third aspect, or the fourth aspect.

According to a fifteenth aspect, an embodiment of this application further provides a processor. The processor includes at least one circuit, configured to perform the method according to the first aspect, the second aspect, the third aspect, or the fourth aspect.

It can be learned that, in the foregoing aspects, the uplink OAM mode information corresponding to the first terminal device in the first cell is different from the uplink OAM mode information corresponding to the at least one second terminal device in the second cell, so that an OAM wave used by the first terminal device to send uplink data and an OAM wave used by the at least one second terminal device to send uplink data are orthogonal to each other. In this way, mutual interference between the uplink data of the adjacent terminal devices that belong to different cells is avoided; and/or the downlink OAM mode information corresponding to the first terminal device in the first cell is different from the downlink OAM mode information corresponding to the at least one second terminal device in the second cell, so that OAM waves used by different network devices in adjacent cells to send downlink data are orthogonal to each other. In this way, mutual interference between the downlink data of the adjacent cells is avoided, reliability of signal transmission is improved, and a data transmission error is avoided. The uplink OAM mode information corresponding to the first terminal device in the first cell is different from the downlink OAM mode information corresponding to the at least one second terminal device in the second cell, so that an OAM wave used by the first terminal device to send uplink data and an OAM wave used by a network device in the second cell to send downlink data are orthogonal to each other, and mutual interference between uplink data and downlink data of the adjacent cells is avoided; and/or the downlink OAM mode information corresponding to the first terminal device in the first cell is different from the uplink OAM mode information corresponding to the at least one second terminal device in the second cell, so that an OAM wave used by a network device in the first cell to send downlink data and an OAM wave used by the at least one second terminal device to send uplink data are orthogonal to each other, mutual interference between downlink data and uplink data of the adjacent cells is avoided, reliability of signal transmission is improved, and a data transmission error is avoided.

### BRIEF DESCRIPTION OF DRAWINGS

FIG. 1 is a schematic diagram of an application scenario according to an embodiment of this application;
FIG. 2 is a schematic diagram of a wavefront structure of a radio electromagnetic wave whose OAM mode is *l* = 0 according to an embodiment of this application;
FIG. 3 is a schematic diagram of a wavefront structure of a radio electromagnetic wave whose OAM mode is *l* = 1 according to an embodiment of this application;
FIG. 4 is a schematic diagram of a wavefront structure of a radio electromagnetic wave whose OAM mode is *l* = 2 according to an embodiment of this application;
FIG. 5 is a schematic diagram of a wavefront structure of a radio electromagnetic wave whose OAM mode is *l* = 3 according to an embodiment of this application;
FIG. 6 is a schematic diagram of another application scenario according to an embodiment of this application;
FIG. 7 is a schematic diagram of still another application scenario according to an embodiment of this application;
FIG. 8 is a schematic diagram of yet another application scenario according to an embodiment of this application;
FIG. 9 is a flowchart of a signal interference coordination method according to an embodiment of this application;
FIG. 10 is a schematic diagram of still yet another application scenario according to an embodiment of this application;
FIG. 11 is a schematic diagram of a structure of a communication apparatus according to an embodiment of this application;
FIG. 12 is a schematic diagram of a structure of another communication apparatus according to an embodiment of this application;
FIG. 13 is a schematic diagram of a structure of another communication apparatus according to an embodiment of this application;
FIG. 14 is a schematic diagram of a structure of another communication apparatus according to an embodiment of this application;
FIG. 15 is a schematic diagram of a structure of another communication apparatus according to an embodiment of this application;
FIG. 16 is a schematic diagram of a structure of still another communication apparatus according to an embodiment of this application;
FIG. 17 is a schematic diagram of a structure of still another communication apparatus according to an embodiment of this application;
FIG. 18A and FIG. 18B are a schematic diagram of a structure of a communication system according to an embodiment of this application; and
FIG. 19 is a schematic diagram of a structure of still another communication apparatus according to an embodiment of this application.

### DESCRIPTION OF EMBODIMENTS

Terms used in embodiments of this application are only used for explaining specific embodiments of this application, but are not intended to limit this application.

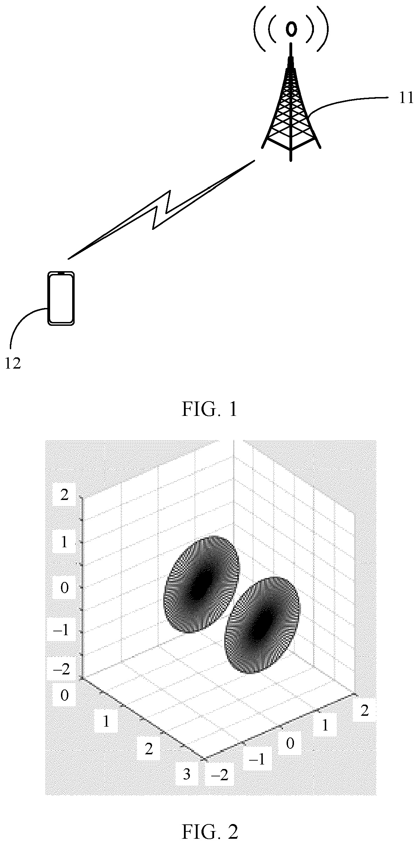

Embodiments of this application may be applied to various types of communication systems. FIG. 1 is a schematic diagram of an application scenario according to an embodiment of this application. A communication system shown in FIG. 1 mainly includes a network device 11 and a terminal device 12.
(1) The network device 11 may be a network-side device, for example, an access point (Access Point, AP) of a wireless local area network (Wireless Local Area Network, WLAN), an evolved NodeB (Evolved NodeB, eNB or eNodeB) of 4G, a base station of a new radio access technology (New Radio Access Technology, NR) of 5G (next generation NodeB, gNB), a base station for next-generation communication, a satellite, a small cell, a micro base station, a relay station, a transmission and reception point (Transmission and Reception Point, TRP), a road side unit (Road Side Unit, RSU), or the like. For differentiation, a base station in a 4G communication system is referred to as a long term evolution (Long Term Evolution, LTE) eNB, and a base station in a 5G communication system is referred to as an NR gNB. It may be understood that some base stations can support both the 4G communication system and the 5G communication system. In addition, these names of the base stations are only for ease of differentiation, but are not for limitation.
(2) The terminal device 12 is also referred to as user equipment (User Equipment, UE), and is a device that provides voice and/or data connectivity for a user. For example, the terminal device 12 is a handheld device with a wireless connection function, a vehicle-mounted device, or a vehicle with a vehicle to vehicle (vehicle to vehicle, V2V) communication capability. Common terminal devices include a mobile phone, a tablet computer, a notebook computer, a palmtop computer, a mobile Internet device (mobile Internet device, MID), a wearable device such as a smartwatch, a smart band, or a pedometer, and the like.
(3) The term "a plurality of" indicates two or more, and another quantifier is similar to the term "a plurality of". The term "and/or" describes a correspondence between associated objects and represents that three relationships may exist. For example, A and/or B may represent the following three cases: Only A exists, both A and B exist, and only B exists. The character "/" usually indicates an "or" relationship between the associated objects.

It should be noted that a quantity of terminal devices 12 included in the communication system shown in FIG. 1 and types of the terminal devices 12 are merely an example. Embodiments of this application are not limited thereto. For example, the communication system may alternatively include more terminal devices 12 that communicate with the network device 11. For brevity, details are not described in the accompanying drawings. In addition, although the network device 11 and the terminal device 12 are shown in the communication system shown in FIG. 1, the communication system may not be limited to including the network device 11 and the terminal device 12. For example, the communication system may further include a core network node, or a device configured to carry a virtualized network function. This is clear to a person of ordinary skill in the art, and details are not described herein.

In addition, embodiments of this application may be applied to communication systems such as a 4G wireless communication system, a vehicle to everything (vehicle to everything, V2X) communication system, a device-to-device (Device-to-Device, D2D) communication system, an LTE subsequent evolved communication system, a 5G communication system, and a satellite communication system. Embodiments of this application may be further applied to a next-generation wireless communication system. In addition, embodiments of this application may be further applied to another system that may emerge in the future, for example, a next-generation Wi-Fi network or 5G Internet of Vehicles.

It should be noted that with continuous evolution of the communication system, names of the foregoing network elements may change in another system that may emerge in the future. In this case, the solutions provided in embodiments of this application are also applicable.

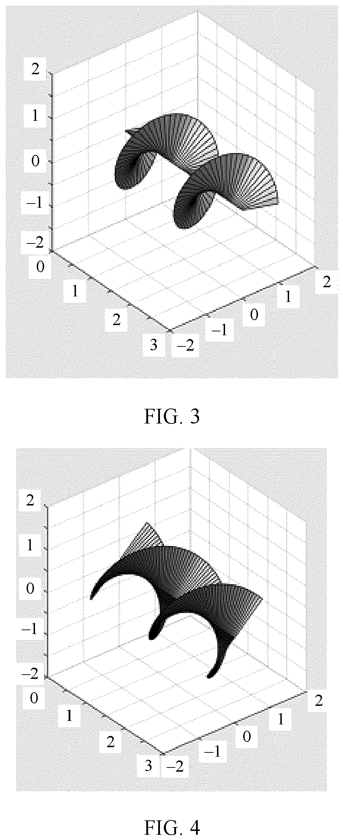

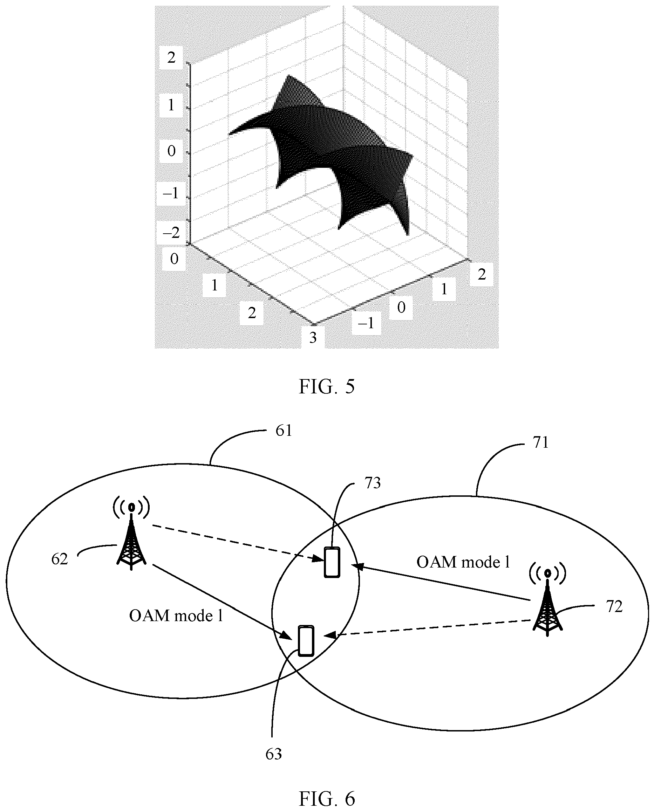

In embodiments of this application, the network device and the terminal device may communicate with each other by using an OAM wave. The OAM wave may be specifically obtained by adding a phase factor to a common radio electromagnetic wave. An amplitude of the common radio electromagnetic wave may be denoted as *A*(*r*), where r represents a radiation distance from an optical center to a beam center axis. The phase factor may be denoted as *e^{ilϕ}*, where *i* represents an imaginary unit, *ϕ* represents an azimuth, and *l* represents OAM mode information of a radio electromagnetic wave. The OAM mode information may be used for identifying an OAM mode. For example, different OAM mode information may correspond to different OAM modes. In other words, the OAM mode information and the OAM mode may be in a one-to-one correspondence. The radio electromagnetic wave to which the phase factor *e^{ilϕ}* is added may be expressed as *U*(*r,ϕ*). *U*(*r,ϕ*) = *A*(*r*)*e^{ilϕ}*. When *l* = 0, *U*(*r,ϕ*) specifically represents a common radio electromagnetic wave, and a wavefront of the radio electromagnetic wave is of a planar structure. When *l* ≠ 0, *U*(*r,ϕ*) specifically represents an OAM wave; and a wavefront of the OAM wave is no longer of a planar structure, but may rotate around a beam propagation direction, and the wavefront structure is changed into a spiral phase wavefront structure. The OAM mode information *l* may be an unrestricted integer, and wavefront structures of OAM waves corresponding to different OAM mode information are also different. For example, a wavefront structure of a radio electromagnetic wave when *l* = 0 shown in FIG. 2, a wavefront structure of an OAM wave when *l*=1 shown in FIG. 3, a wavefront structure of an OAM wave when *l*=2 shown in FIG. 4, and a wavefront structure of an OAM wave when *l*=3 shown in FIG. 5 are different. It can be learned that a phase factor of OAM mode information *l* ≠ 0 may enable a radio electromagnetic wave to have a spiral non-planar wavefront structure.

Generally, data between adjacent cells interferes with each other. A possible interference case is that uplink data between the adjacent cells interferes with each other, and/or downlink data between the adjacent cells interferes with each other. Another possible interference case is that uplink data and downlink data between the adjacent cells interfere with each other.

As shown in FIG. 6, a cell 61 and a cell 71 are adjacent cells, a network device 62 is a network device in the cell 61, and a terminal device 63 is an edge terminal device in the cell 61. A network device 72 is a network device in the cell 71, and a terminal device 73 is an edge terminal device in the cell 71. Specifically, the network device 62 sends downlink data to the terminal device 63 in an OAM mode corresponding to the OAM mode information *l*, and the network device 72 also sends downlink data to the terminal device 73 in the same OAM mode corresponding to the OAM mode information *l*. Consequently, the downlink data sent by the network device 62 to the terminal device 63 and the downlink data sent by the network device 72 to the terminal device 73 interfere with each other. For example, as shown in FIG. 6, the downlink data sent by the network device 62 to the terminal device 63 may be received by the terminal device 73, and the downlink data sent by the network device 72 to the terminal device 73 may be received by the terminal device 63.

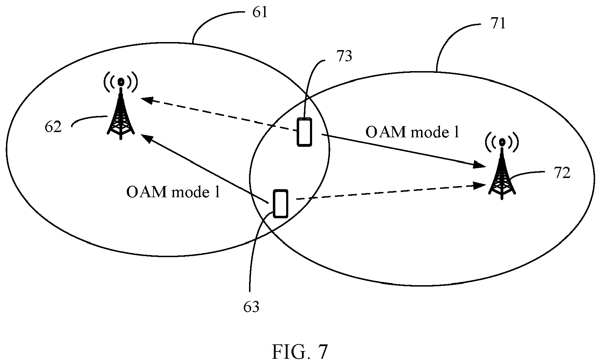

As shown in FIG. 7, the terminal device 63 sends uplink data to the network device 62 in the OAM mode corresponding to the OAM mode information *l*, and the terminal device 73 also sends uplink data to the network device 72 in the OAM mode corresponding to the OAM mode information *l*. Consequently, the uplink data sent by the terminal device 63 to the network device 62 and the uplink data sent by the terminal device 73 to the network device 72 interfere with each other. For example, as shown in FIG. 7, the uplink data sent by the terminal device 63 to the network device 62 may be received by the network device 72, and the uplink data sent by the terminal device 73 to the network device 72 may be received by the network device 62.

In addition, as shown in FIG. 6 or FIG. 7, if the OAM mode used by the terminal device 63 to send uplink data is the same as the OAM mode used by the terminal device 73 to receive downlink data, the uplink data in the cell 61 and the downlink data in the cell 71 interfere with each other. If the OAM mode used by the terminal device 63 to receive downlink data is the same as the OAM mode used by the terminal device 73 to send uplink data, the downlink data in the cell 61 and the uplink data in the cell 71 interfere with each other.

In other words, if network devices in adjacent cells send downlink data to edge terminal devices in their respective cells by using an OAM wave of a same OAM mode, and/or the edge terminal devices in the adjacent cells send uplink data to their respective network devices by using the OAM wave of the same OAM mode, the uplink data between the adjacent cells may interfere with each other, and/or the downlink data between the adjacent cells may interfere with each other. If the OAM mode used by the network devices in the adjacent cells to send downlink data is the same as the OAM mode used by the edge terminal devices in their respective adjacent cells to send uplink data, the uplink data and the downlink data between the adjacent cells may interfere with each other. Consequently, reliability of signal transmission is reduced, and a data transmission error is caused. To resolve the problem, an embodiment of this application provides a signal interference coordination method. The following describes the signal interference coordination method in detail with reference to embodiments.

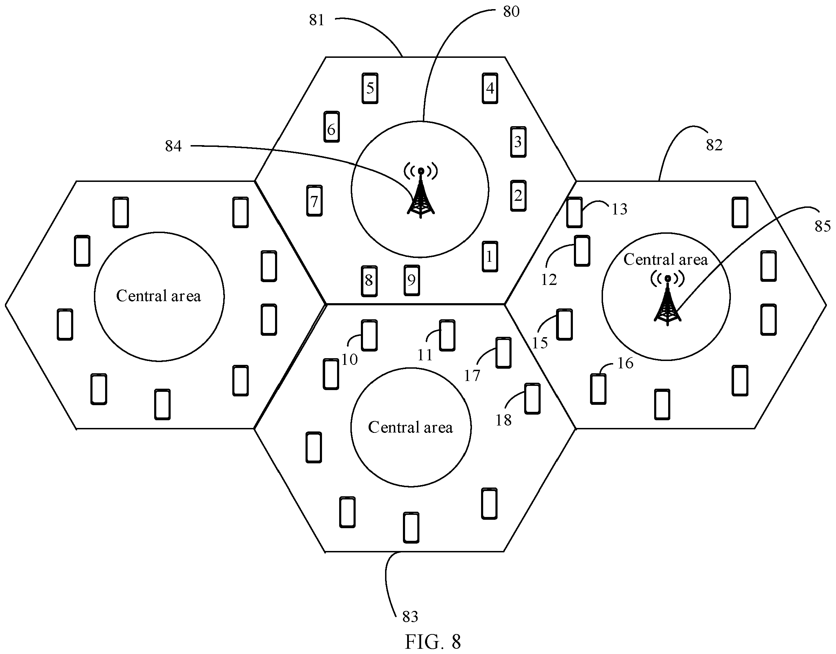

The signal interference coordination method in this embodiment is applicable to an application scenario shown in FIG. 8. As shown in FIG. 8, a cell 81, a cell 82, and a cell 83 are adjacent cellular cells. Each cell includes one or more terminal devices. If a cell includes a plurality of terminal devices, the plurality of terminal devices in the cell may be classified into edge terminal devices and central terminal devices. The cell 81 is used as an example. A terminal device 1, a terminal device 2, a terminal device 3, a terminal device 4, a terminal device 5, a terminal device 6, a terminal device 7, a terminal device 8, and a terminal device 9 are edge terminal devices in the cell 81. A central terminal device in the cell may be located in a central area 80. To be specific, the center terminal device in the cell is close to a network device in the cell, and quality of a signal between the center terminal device and the network device is good. The edge terminal device in the cell is far away from the network device in the cell, and quality of a signal between the edge terminal device and the network device is poor. The following describes the signal interference coordination method with reference to the application scenario shown in FIG. 8.

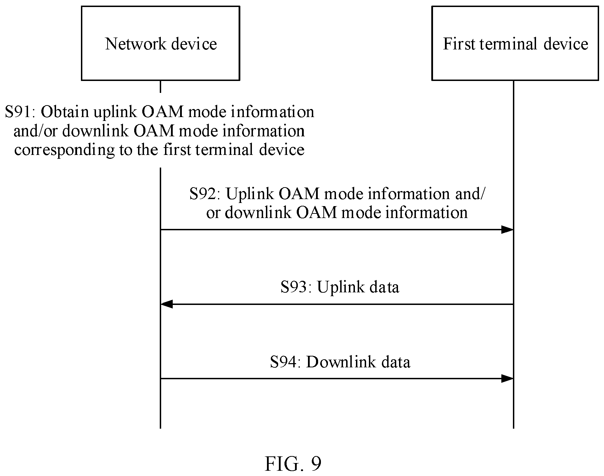

FIG. 9 is a flowchart of a signal interference coordination method according to an embodiment of this application. As shown in FIG. 9, the signal interference coordination method in this embodiment includes the following steps.

S91: A network device obtains uplink OAM mode information and/or downlink OAM mode information corresponding to a first terminal device.

In this embodiment, the network device may be, for example, a network device 84 in the cell 81 shown in FIG. 8, and the first terminal device may be, for example, the terminal device 1 in the cell 81 shown in FIG. 8. The network device 84 may obtain uplink OAM mode information and/or downlink OAM mode information corresponding to the terminal device 1. In a possible manner, the network device 84 may pre-store uplink OAM mode information and/or downlink OAM mode information corresponding to each edge terminal device in the cell 81, and the network device 84 may obtain, from the pre-stored information, the uplink OAM mode information and/or the downlink OAM mode information corresponding to the terminal device 1. In another possible manner, the network device 84 may select, from an alternative set, the uplink OAM mode information and/or the downlink OAM mode information corresponding to the terminal device 1. The alternative set may be a set including OAM mode information corresponding to OAM modes supported by the cell 81, or the alternative set is a subset of a set including OAM mode information corresponding to OAM modes supported by the cell 81.

S92: The network device sends, to the first terminal device, the uplink OAM mode information and/or the downlink OAM mode information corresponding to the first terminal device; and correspondingly, the first terminal device receives, from the network device, the uplink OAM mode information and/or the downlink OAM mode information corresponding to the first terminal device.

For example, the network device 84 sends, to the terminal device 1, the uplink OAM mode information and/or the downlink OAM mode information corresponding to the terminal device 1. Correspondingly, the terminal device 1 receives, from the network device 84, the uplink OAM mode information and/or the downlink OAM mode information corresponding to the terminal device 1. Alternatively, the terminal device 1 may pre-store the uplink OAM mode information and/or the downlink OAM mode information corresponding to the terminal device 1. When the terminal device 1 is to send uplink data, the terminal device 1 obtains the uplink OAM mode information corresponding to the terminal device 1 from the pre-stored information. When the terminal device 1 is to receive downlink data, the terminal device 1 obtains the downlink OAM mode information corresponding to the terminal device 1 from the pre-stored information.

S93: The first terminal device sends uplink data to the network device based on the uplink OAM mode information corresponding to the first terminal device; and correspondingly, the network device receives the uplink data.

Specifically, the terminal device 1 may determine an uplink OAM mode based on the uplink OAM mode information corresponding to the terminal device 1, where the uplink OAM mode may be used by the terminal device 1 to send uplink data.

For example, when the terminal device 1 sends the uplink data to the network device 84, the terminal device 1 encodes the uplink data through channel coding, performs constellation modulation on uplink data obtained through channel coding, and transmits uplink data obtained through constellation modulation to the network device 84 by using an OAM wave. In addition, an OAM mode of the OAM wave is the uplink OAM mode corresponding to the terminal device 1. The network device 84 receives the uplink data sent by the terminal device 1 based on the uplink OAM mode corresponding to the terminal device 1.

S94: The network device sends downlink data to the first terminal device based on the downlink OAM mode information corresponding to the first terminal device; and correspondingly, the first terminal device receives the downlink data based on the downlink OAM mode information corresponding to the first terminal device.

Specifically, the terminal device 1 may determine a downlink OAM mode based on the downlink OAM mode information corresponding to the terminal device 1, where the downlink OAM mode may be used by the terminal device 1 to receive downlink data.

For example, when the network device 84 sends the downlink data to the terminal device 1, the network device 84 encodes the downlink data through channel coding, performs constellation modulation on downlink data obtained through channel coding, and transmits downlink data obtained through constellation modulation to the terminal device 1 by using an OAM wave. In addition, an OAM mode of the OAM wave is the downlink OAM mode corresponding to the terminal device 1. The terminal device 1 receives the downlink data based on the downlink OAM mode corresponding to the terminal device 1.

It may be understood that S93 and S94 may coexist, or may not coexist. For example, some embodiments may include S91, S92, and S93 described above. Some other embodiments may include S91, S92, and S94 described above. Some other embodiments may include S91, S92, S93, and S94 described above.

In addition, as shown in FIG. 8, a terminal device 12 and a terminal device 13 are edge terminal devices in the cell 82, and the terminal device 12 and the terminal device 13 each are adjacent to the terminal device 1 in the cell 81. In this embodiment of this application, the cell 81 may be denoted as a first cell, and the terminal device 1 in the cell 81 may be denoted as the first terminal device. The cell 82 is denoted as a second cell, and the terminal device 12 and the terminal device 13 in the cell 82 are denoted as second terminal devices. It may be understood that the cell 81 and the cell 82 shown in FIG. 8 are merely examples for description, a quantity and locations of edge terminal devices in each cell are not limited, and a quantity of first terminal devices and a quantity of second terminal devices described above are not limited either. For example, in some embodiments, there may be one second terminal device.

In addition, OAM waves of different OAM modes are orthogonal to each other. In other words, if OAM modes of any two OAM waves are different, the two OAM waves are orthogonal to each other. In this way, mutual interference between the two OAM waves can be avoided.

In a possible manner, the uplink OAM mode information corresponding to the first terminal device is different from uplink OAM mode information corresponding to at least one second terminal device, and/or the downlink OAM mode information corresponding to the first terminal device is different from downlink OAM mode information corresponding to the at least one second terminal device. In this way, mutual interference of uplink data between adjacent cells and/or mutual interference of downlink data between adjacent cells can be avoided.

The terminal device 1, the terminal device 12, and the terminal device 13 shown in FIG. 8 are used as an example. In OAM wave-based uplink transmission, when the terminal device 1, the terminal device 12, and the terminal device 13 use another same transmission mode or transmission form, the uplink OAM mode information corresponding to the terminal device 1 is different from uplink OAM mode information corresponding to the terminal device 12, and/or the uplink OAM mode information corresponding to the terminal device 1 is different from uplink OAM mode information corresponding to the terminal device 13, so that an uplink OAM mode used by the terminal device 12 and/or the terminal device 13 to send uplink data is different from the uplink OAM mode used by the terminal device 1 to send uplink data. In this way, mutual interference between the uplink data sent by the terminal device 12 and/or the terminal device 13 to a network device 85 and the uplink data sent by the terminal device 1 to the network device 84 can be avoided. In other words, mutual interference between the uplink data of the adjacent cells can be avoided. The another transmission mode or transmission form includes transmission time, a frequency domain resource, and a corresponding codebook that exists when a multiple-input multiple-output (Multi-Input Multi-Output, MIMO) technology is used.

In OAM wave-based downlink transmission, when the terminal device 1, the terminal device 12, and the terminal device 13 use another same transmission mode or transmission form, the downlink OAM mode information corresponding to the terminal device 1 is different from downlink OAM mode information corresponding to the terminal device 12; and/or the downlink OAM mode information corresponding to the terminal device 1 is different from downlink OAM mode information corresponding to the terminal device 13, so that a downlink OAM mode used by the terminal device 12 and/or the terminal device 13 to receive downlink data is different from the downlink OAM mode used by the terminal device 1 to receive downlink data. In this way, mutual interference between the downlink data sent by the network device 85 to the terminal device 12 and/or the terminal device 13 and the downlink data sent by the network device 84 to the terminal device 1 can be avoided. In other words, mutual interference between the downlink data of the adjacent cells can be avoided.

It may be understood that when the uplink OAM mode information corresponding to the first terminal device (for example, the terminal device 1) is different from the uplink OAM mode information corresponding to the at least one second terminal device (for example, the terminal device 12 and the terminal device 13); and/or when the downlink OAM mode information corresponding to the first terminal device is different from the downlink OAM mode information corresponding to the at least one second terminal device, the first terminal device and the at least one second terminal device may use another same transmission mode or transmission form or other different transmission modes or transmission forms.

In this embodiment, the uplink OAM mode information corresponding to the first terminal device in the first cell is different from the uplink OAM mode information corresponding to the at least one second terminal device in the second cell, so that an OAM wave used by the first terminal device to send uplink data and an OAM wave used by the at least one second terminal device to send uplink data are orthogonal to each other. In this way, mutual interference between the uplink data of the adjacent terminal devices that belong to different cells is avoided; and/or the downlink OAM mode information corresponding to the first terminal device in the first cell is different from the downlink OAM mode information corresponding to the at least one second terminal device in the second cell, so that OAM waves used by different network devices in the adjacent cells to send downlink data may be orthogonal to each other. In this way, mutual interference between the downlink data of the adjacent cells is avoided, reliability of signal transmission is improved, and a data transmission error is avoided.

In an alternative manner of the foregoing embodiment, the uplink OAM mode information corresponding to the first terminal device is different from the downlink OAM mode information corresponding to the at least one second terminal device, and/or the downlink OAM mode information corresponding to the first terminal device is different from the uplink OAM mode information corresponding to the at least one second terminal device. In this way, mutual interference of the uplink data and the downlink data between the adjacent cells can be avoided.

As shown in FIG. 8, when the terminal device 1, the terminal device 12, and the terminal device 13 use another same transmission mode or transmission form, the uplink OAM mode information corresponding to the terminal device 1 is different from the downlink OAM mode information corresponding to the terminal device 12; and/or the uplink OAM mode information corresponding to the terminal device 1 is different from the downlink OAM mode information corresponding to the terminal device 13, so that the downlink OAM mode used by the terminal device 12 and/or the terminal device 13 to receive downlink data is different from the uplink OAM mode used by the terminal device 1 to send uplink data. In this way, mutual interference between the uplink data sent by the terminal device 1 to the network device 84 and the downlink data sent by the network device 85 to the terminal device 12 and/or the terminal device 13 can be avoided. In other words, interference of the uplink data and the downlink data between the adjacent cells can be avoided.

In addition, when the terminal device 1, the terminal device 12, and the terminal device 13 use another same transmission mode or transmission form, the downlink OAM mode information corresponding to the terminal device 1 is different from the uplink OAM mode information corresponding to the terminal device 12; and/or the downlink OAM mode information corresponding to the terminal device 1 is different from the uplink OAM mode information corresponding to the terminal device 13, so that the uplink OAM mode used by the terminal device 12 and/or the terminal device 13 to send uplink data is different from the downlink OAM mode used by the terminal device 1 to receive downlink data. In this way, mutual interference between the uplink data sent by the terminal device 12 and/or the terminal device 13 to the network device 85 and the downlink data sent by the network device 84 to the terminal device 1 can be avoided. In other words, interference of the uplink data and the downlink data between the adjacent cells can be avoided.

It may be understood that when the uplink OAM mode information corresponding to the first terminal device (for example, the terminal device 1) is different from the downlink OAM mode information corresponding to the at least one second terminal device (for example, the terminal device 12 and the terminal device 13); and/or when the downlink OAM mode information corresponding to the first terminal device is different from the uplink OAM mode information corresponding to the at least one second terminal device, the first terminal device and the at least one second terminal device may use another same transmission mode or transmission form or other different transmission modes or transmission forms.

In this embodiment, the uplink OAM mode information corresponding to the first terminal device in the first cell is different from the downlink OAM mode information corresponding to the at least one second terminal device in the second cell, so that the OAM wave used by the first terminal device to send uplink data and an OAM wave used by a network device in the second cell to send downlink data are orthogonal to each other. In this way, mutual interference between the uplink data and the downlink data between the adjacent cells is avoided; and/or the downlink OAM mode information corresponding to the first terminal device in the first cell is different from the uplink OAM mode information corresponding to the at least one second terminal device in the second cell, so that an OAM wave used by a network device in the first cell to send downlink data and the OAM wave used by the at least one second terminal device to send uplink data are orthogonal to each other. In this way, mutual interference between the downlink data and the uplink data between the adjacent cells is avoided, reliability of signal transmission is improved, and a data transmission error is avoided.

It may be understood that a manner in which the uplink OAM mode information corresponding to the first terminal device is different from the uplink OAM mode information corresponding to the at least one second terminal device, and/or the downlink OAM mode information corresponding to the first terminal device is different from the downlink OAM mode information corresponding to the at least one second terminal device in the foregoing embodiment may be independent of a manner in which the uplink OAM mode information corresponding to the first terminal device is different from the downlink OAM mode information corresponding to the at least one second terminal device, and/or the downlink OAM mode information corresponding to the first terminal device is different from the uplink OAM mode information corresponding to the at least one second terminal device. In other words, the two manners are in a parallel relationship. In addition, the two manners may alternatively be associated with each other. For example, the latter manner is added on the basis of the former manner, or the former manner is added on the basis of the latter manner. The foregoing embodiment is described by using an example in which the two manners are independent of each other. The following embodiment describes a case in which the two manners are associated with each other.

For example, on the basis of the manner in which the uplink OAM mode information corresponding to the first terminal device is different from the uplink OAM mode information corresponding to the at least one second terminal device, and/or the downlink OAM mode information corresponding to the first terminal device is different from the downlink OAM mode information corresponding to the at least one second terminal device, there may further be the manner in which the uplink OAM mode information corresponding to the first terminal device is different from the downlink OAM mode information corresponding to the at least one second terminal device, and/or the downlink OAM mode information corresponding to the first terminal device is different from the uplink OAM mode information corresponding to the at least one second terminal device.

As shown in FIG. 8, when the terminal device 1, the terminal device 12, and the terminal device 13 use another same transmission mode or transmission form, the uplink OAM mode information corresponding to the terminal device 1 is different from the uplink OAM mode information corresponding to the terminal device 12 and/or the terminal device 13, the downlink OAM mode information corresponding to the terminal device 1 is different from the downlink OAM mode information corresponding to the terminal device 12 and/or the terminal device 13. In this way, mutual interference between the uplink data of the adjacent cells can be avoided, and mutual interference between the downlink data of the adjacent cells can be avoided. On this basis, the uplink OAM mode information corresponding to the terminal device 1 may be different from the downlink OAM mode information corresponding to the terminal device 12 and/or the terminal device 13, and the downlink OAM mode information corresponding to the terminal device 1 may be different from the uplink OAM mode information corresponding to the terminal device 12 and/or the terminal device 13. In this way, mutual interference of the uplink data and the downlink data between the adjacent cells is further avoided, reliability of signal transmission can be further improved, and a data transmission error can be avoided.

In addition, as shown in FIG. 8, the terminal device 2 and the terminal device 1 are in a same cell, and the terminal device 2 is adjacent to the terminal device 1. Herein, the terminal device 2 may be denoted as a third terminal device. It may be understood that in the cell 81, there may be more than one terminal device adjacent to the terminal device 1. In other words, there may be one or more third terminal devices. To avoid mutual interference between the uplink data sent by the terminal device 12 and/or the terminal device 13 and uplink data sent by the terminal device 2, the uplink OAM mode information corresponding to the terminal device 12 and/or the terminal device 13 may be different from uplink OAM mode information corresponding to the terminal device 2. To avoid mutual interference between the downlink data received by the terminal device 12 and/or the terminal device 13 and downlink data received by the terminal device 2, the downlink OAM mode information corresponding to the terminal device 12 and/or the terminal device 13 may be different from downlink OAM mode information corresponding to the terminal device 2. Similarly, to avoid mutual interference between the uplink data sent by the terminal device 12 and/or the terminal device 13 and the downlink data received by the terminal device 2, the uplink OAM mode information corresponding to the terminal device 12 and/or the terminal device 13 may be different from the downlink OAM mode information corresponding to the terminal device 2. To avoid mutual interference between the downlink data received by the terminal device 12 and/or the terminal device 13 and the uplink data sent by the terminal device 2, the downlink OAM mode information corresponding to the terminal device 12 and/or the terminal device 13 may be different from the uplink OAM mode information corresponding to the terminal device 2.

The foregoing embodiments describe uplink OAM mode information and/or downlink OAM mode information of adjacent terminal devices in different cells. This embodiment describes uplink OAM mode information and/or downlink OAM mode information of adjacent terminal devices in a same cell, for example, the uplink OAM mode information and/or the downlink OAM mode information corresponding to the terminal device 1 and the terminal device 2 in the cell 81.

When the terminal device 1 and the terminal device 2 use another same transmission mode or transmission form, the uplink OAM mode information corresponding to the terminal device 1 is different from the uplink OAM mode information corresponding to the terminal device 2, so that the uplink OAM mode used by the terminal device 1 to send uplink data is different from an uplink OAM mode used by the terminal device 2 to send uplink data. In this way, mutual interference between the uplink data sent by the terminal device 1 and the uplink data sent by the terminal device 2 in the same cell can be avoided. Similarly, the downlink OAM mode information corresponding to the terminal device 1 is different from the downlink OAM mode information corresponding to the terminal device 2, so that the downlink OAM mode used by the terminal device 1 to receive downlink data may be different from a downlink OAM mode used by the terminal device 2 to receive downlink data. In this way, mutual interference between the downlink data received by the terminal device 1 and the downlink data received by the terminal device 2 in the same cell can be avoided.

It may be understood that in the same cell, the uplink OAM mode information corresponding to the terminal device 1 may be the same as the uplink OAM mode information corresponding to the terminal device 2, and/or the downlink OAM mode information corresponding to the terminal device 1 may be the same as the downlink OAM mode information corresponding to the terminal device 2. In this case, the terminal device 1 and the terminal device 2 need to use other different transmission modes or transmission forms, for example, at least one of transmission time, a frequency domain resource, and a corresponding codebook that exists when the MIMO technology is used is different.

Similarly, when the terminal device 1 and the terminal device 2 use another same transmission mode or transmission form, the uplink OAM mode information corresponding to the terminal device 1 is different from the downlink OAM mode information corresponding to the terminal device 2, so that the uplink OAM mode used by the terminal device 1 to send uplink data is different from the downlink OAM mode used by the terminal device 2 to receive downlink data. In this way, mutual interference between the uplink data sent by the terminal device 1 and the downlink data received by the terminal device 2 in the same cell can be avoided. Similarly, the downlink OAM mode information corresponding to the terminal device 1 is different from the uplink OAM mode information corresponding to the terminal device 2, so that the downlink OAM mode used by the terminal device 1 to receive downlink data may be different from the uplink OAM mode used by the terminal device 2 to send uplink data. In this way, mutual interference between the downlink data received by the terminal device 1 and the uplink data sent by the terminal device 2 in the same cell can be avoided.

It may be understood that in the same cell, the uplink OAM mode information corresponding to the terminal device 1 may be the same as the downlink OAM mode information corresponding to the terminal device 2, and/or the downlink OAM mode information corresponding to the terminal device 1 may be the same as the uplink OAM mode information corresponding to the terminal device 2. In this case, the terminal device 1 and the terminal device 2 need to use other different transmission modes or transmission forms, for example, at least one of transmission time, a frequency domain resource, and a corresponding codebook that exists when the MIMO technology is used is different.

In this embodiment, in the same cell, the uplink OAM mode information corresponding to the first terminal device is different from the uplink OAM mode information corresponding to the third terminal device, so that the OAM wave used by the first terminal device to send uplink data and the OAM wave used by the third terminal device to send uplink data are orthogonal to each other. In this way, mutual interference between the uplink data of the adjacent terminal devices that belong to the same cell is avoided. In the same cell, the downlink OAM mode information corresponding to the first terminal device is different from the downlink OAM mode information corresponding to the third terminal device, so that OAM waves used by network devices in the same cell to send downlink data to the adjacent terminal devices in the cell may be orthogonal to each other. In this way, mutual interference between the downlink data in the same cell is avoided. In addition, in the same cell, the uplink OAM mode information corresponding to the first terminal device may alternatively be different from the downlink OAM mode information corresponding to the third terminal device, so that mutual interference between the uplink data sent by the first terminal device to the network device and the downlink data sent by the network device to the third terminal device in the same cell is avoided. In addition, in the same cell, the downlink OAM mode information corresponding to the first terminal device is different from the uplink OAM mode information corresponding to the third terminal device, so that mutual interference between the downlink data sent by the network device to the first terminal device and the uplink data sent by the third terminal device to the network device in the same cell can also be avoided. Therefore, reliability of signal transmission in the same cell is improved, and a data transmission error is avoided.

It may be understood that, for a same terminal device, uplink OAM mode information corresponding to the terminal device may be the same as or different from downlink OAM mode information corresponding to the terminal device. When the uplink OAM mode information corresponding to the terminal device is different from the downlink OAM mode information corresponding to the terminal device, mutual interference between uplink data and downlink data of the same terminal device can be avoided. If the uplink OAM mode information corresponding to the terminal device is the same as the downlink OAM mode information corresponding to the terminal device, mutual interference between the uplink data and the downlink data of the same terminal device may be avoided in another manner. For example, the terminal device may send uplink data and receive downlink data in a time division mode.

In addition, the second cell may alternatively be the cell 83 shown in FIG. 8, and the second terminal device may alternatively be a terminal device 10 and a terminal device 11 in the cell 83 shown in FIG. 8. In this case, the first terminal device may be the terminal device 8 in the cell 81 shown in FIG. 8, the terminal device 10 and the terminal device 11 each are adjacent to the terminal device 8, the third terminal device may be the terminal device 9 in the cell 81 shown in FIG. 8, and the terminal device 8 and the terminal device 9 are adjacent to each other in a same cell. In addition, if the cell 82 is denoted as the first cell, the cell 81 or the cell 83 may be denoted as the second cell. In this case, the first terminal device may be the terminal device 12 in the cell 82, the terminal device 1 and the terminal device 2 each may be denoted as a second terminal device, and the terminal device 13 may be denoted as the third terminal device. For the uplink OAM mode and/or the downlink OAM mode corresponding to the first terminal device, the second terminal device, and the third terminal device, refer to the content described in the foregoing embodiments, and details are not described herein again.

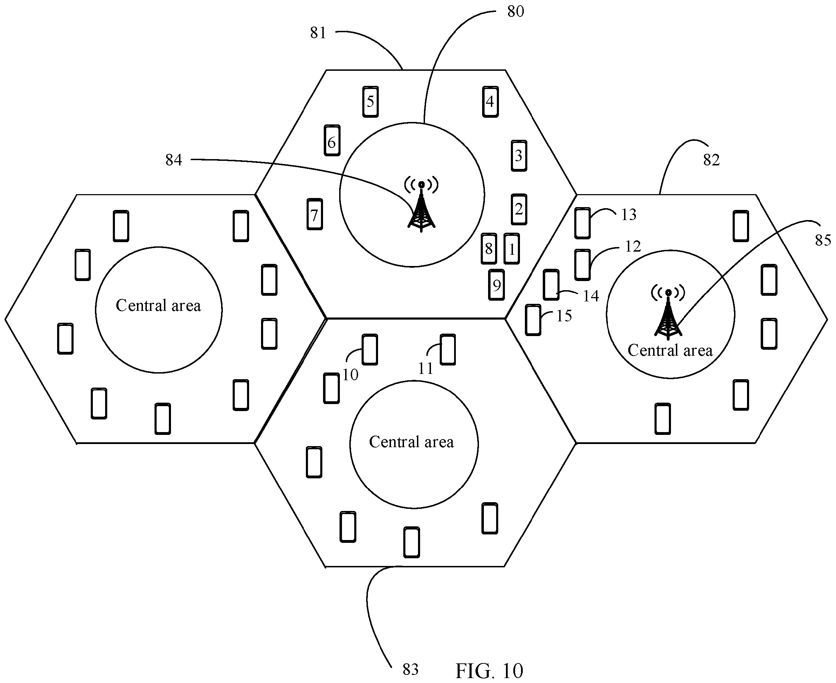

The following uses an example in which the cell 81 is the first cell, the cell 82 is the second cell, the terminal device 1 is the first terminal device, the terminal device 12, the terminal device 13, a terminal device 14, and a terminal device 15 are second terminal devices, and the terminal device 2, the terminal device 8, and the terminal device 9 are third terminal devices shown in FIG. 10 for description.

When the uplink OAM mode information corresponding to the first terminal device is different from the uplink OAM mode information corresponding to the at least one second terminal device, and the downlink OAM mode information corresponding to the first terminal device is different from the downlink OAM mode information corresponding to the at least one second terminal device, uplink OAM mode information corresponding to the terminal device 1, the terminal device 2, the terminal device 8, and the terminal device 9 may form a first set, and uplink OAM mode information corresponding to the terminal device 12, the terminal device 13, the terminal device 14, and the terminal device 15 may form a second set. Alternatively, downlink OAM mode information corresponding to the terminal device 1, the terminal device 2, the terminal device 8, and the terminal device 9 forms a first set, and downlink OAM mode information corresponding to the terminal device 12, the terminal device 13, the terminal device 14, and the terminal device 15 forms a second set.

When the uplink OAM mode information corresponding to the first terminal device is different from the downlink OAM mode information corresponding to the at least one second terminal device, and the downlink OAM mode information corresponding to the first terminal device is different from the uplink OAM mode information corresponding to the at least one second terminal device, the uplink OAM mode information corresponding to the terminal device 1, the terminal device 2, the terminal device 8, and the terminal device 9 may form the first set, and the downlink OAM mode information corresponding to the terminal device 12, the terminal device 13, the terminal device 14, and the terminal device 15 may form the second set. Alternatively, the downlink OAM mode information corresponding to the terminal device 1, the terminal device 2, the terminal device 8, and the terminal device 9 forms the first set, and the uplink OAM mode information corresponding to the terminal device 12, the terminal device 13, the terminal device 14, and the terminal device 15 forms the second set.

The OAM mode information in the first set is consecutive, or the OAM mode information in the first set is discrete, or the OAM mode information in the first set is partially consecutive and partially discrete. Similarly, the OAM mode information in the second set is consecutive, or the OAM mode information in the second set is discrete, or the OAM mode information in the second set is partially consecutive and partially discrete.

The following uses an example in which the first set includes uplink OAM mode information and the second set also includes uplink OAM mode information for description. Other cases are similar to this case, and details are not described again.

In a possible implementation, the OAM mode information in the first set is consecutive, and the OAM mode information in the second set is consecutive. For example, the uplink OAM mode information corresponding to the terminal device 1, the terminal device 2, the terminal device 8, and the terminal device 9 is sequentially 1, 2, 3, and 4. The first set may be represented as {1, 2, 3, 4}, or the first set may be represented by using an initial value 1 of the OAM mode information, an interval Δ*l* = 1 of the OAM mode information, and a quantity 4 of pieces of OAM mode information. The uplink OAM mode information corresponding to the terminal device 12, the terminal device 13, the terminal device 14, and the terminal device 15 is sequentially 5, 6, 7, and 8. The second set may be represented as {5, 6, 7, 8}, or the second set may be represented by using an initial value 5 of the OAM mode information, an interval Δ*l* = 1 of the OAM mode information, and a quantity 4 of pieces of OAM mode information. It can be seen that the first set and the second set are consecutive. Different terminal devices located around a common boundary of adjacent cells correspond to different uplink OAM mode information. Therefore, wavefront phase rotations of OAM waves used by the different terminal devices located around the common boundary of the adjacent cells are different, and the OAM waves used by the different terminal devices are orthogonal to each other. In this way, signal interference between the different terminal devices around the common boundary of the adjacent cells is suppressed. In addition, there is no intersection set between the first set and the second set. This indicates that an OAM wave corresponding to any piece of OAM mode information in the first set is orthogonal to an OAM wave corresponding to any piece of OAM mode information in the second set.

In another embodiment, when the OAM mode information in the first set is consecutive, and the OAM mode information in the second set is also consecutive, the first set and the second set may be discrete, and an interval between the first set and the second set is greater than or equal to a preset interval. For example, the first set is {1, 2, 3, 4}, the second set is {8, 9, 10, 11}, and the interval between the first set and the second set is an interval between the OAM mode information 4 and the OAM mode information 8. If the preset interval is 3, the interval between the OAM mode information 4 and the OAM mode information 8 is greater than 3. In this case, the interval between the first set and the second set can reduce energy leakage between OAM waves separately used by terminal devices that belong to different cells and that are adjacent to each other in adjacent cells, and further reduce signal interference between the terminal devices that belong to the different cells and that are adjacent to each other in the adjacent cells.

In another possible implementation, the OAM mode information in the first set and the OAM mode information in the second set each are discrete. For example, the first set is represented as {-7, -5, -3, -1}, and the second set is represented as {1, 3, 5, 7}. There are a plurality of intervals between adjacent OAM mode information in the first set. For example, there is an OAM mode information interval between -7 and -5, there is an OAM mode information interval between -5 and -3, and there is an OAM mode information interval between -3 and -1. These intervals are all 2. Similarly, intervals between adjacent OAM mode information in the second set are also 2. In some embodiments, an interval between adjacent OAM mode information in the first set may be different from an interval between adjacent OAM mode information in the second set. For example, the second set is represented as {1, 4, 7, 10}, in other words, the interval between adjacent OAM mode information in the second set is 3.

In addition, the plurality of intervals between the OAM mode information in the first set may be different. For example, the first set is represented as {-5, -4, -2, 2}. Alternatively, the plurality of intervals between the OAM mode information in the first set may be partially the same and partially different. For example, the first set is represented as {-5, -4, -2, -1}. Similarly, a plurality of intervals between the OAM mode information in the second set may be different, or a plurality of intervals between the OAM mode information in the second set may be partially the same and partially different, provided that an OAM wave corresponding to any piece of OAM mode information in the first set is orthogonal to an OAM wave corresponding to any piece of OAM mode information in the second set. Details are not described herein again.

In still another possible implementation, the OAM mode information in the first set is partially consecutive and partially discrete, and the OAM mode information in the second set is partially consecutive and partially discrete. For example, the first set may be represented as {1, 2, 3, 5}, and the second set may be represented as {7, 8, 9, 11}. 1, 2, and 3 are consecutive, and a subset {1, 2, 3} of the first set and 5 are discrete, 7, 8, and 9 are consecutive, and a subset {7, 8, 9} of the second set and 11 are discrete.

In addition, there may alternatively be a plurality of consecutive OAM mode information subsets in the first set, and the plurality of consecutive OAM mode information subsets are discrete. For example, the first set may be represented as {1, 2, 5, 6}, where 1 and 2 are consecutive, 5 and 6 are consecutive, and a subset {1, 2} of the first set and a subset {5, 6} of the first set are discrete. Similarly, there may also be a plurality of consecutive OAM mode information subsets in the second set, and the plurality of consecutive OAM mode information subsets are discrete, provided that an OAM wave corresponding to any piece of OAM mode information in the first set is orthogonal to an OAM wave corresponding to any piece of OAM mode information in the second set.

It may be understood that the first set and the second set may not be both consecutive; or the first set and the second set may not be both discrete; or the first set and the second set may not be both partially consecutive or both partially discrete. For example, when the OAM mode information in the first set is consecutive, the OAM mode information in the second set is discrete; or when the OAM mode information in the first set is partially consecutive and partially discrete, the OAM mode information in the second set is consecutive, provided that an OAM wave corresponding to any piece of OAM mode information in the first set is orthogonal to an OAM wave corresponding to any piece of OAM mode information in the second set.

In addition, there may alternatively be mutually-symmetric OAM mode information in the first set. For example, the first set may be represented as {-4, -1, 1, 4}, where -4 and 4 are mutually-symmetric OAM mode information, and -1 and 1 are mutually-symmetric OAM mode information. Phases of OAM waves corresponding to the mutually-symmetric OAM mode information are exactly opposite, in other words, wavefront phases are exactly directionally-symmetric. In this way, implementation complexity can be reduced, good orthogonality can be ensured, and signal interference between edge terminal devices in a cell can be further reduced. Similarly, there may also be mutually-symmetric OAM mode information in the second set. For example, the second set is represented as {-6, -2, 2,6}.

In addition, as shown in FIG. 10, a set of uplink OAM mode information corresponding to edge terminal devices in the cell 81 such as the terminal device 1, the terminal device 2, ..., and the terminal device 9 may be denoted as a third set, and the network device 84 may determine, from the third set, the uplink OAM mode information corresponding to each of the terminal device 1, the terminal device 2, ..., and the terminal device 9. The third set may be a subset of a set of uplink OAM mode information supported by the cell 81. Similarly, the second set may also be a subset of a set of uplink OAM mode information corresponding to the edge terminal devices in the cell 82.

It may be understood that if the first set includes downlink OAM mode information, and the second set also includes downlink OAM mode information, a set of downlink OAM mode information corresponding to the edge terminal devices in the cell 81 may be denoted as a third set. The first set may be a subset of the third set, and the network device 84 may determine, from the third set, the downlink OAM mode information corresponding to each of the terminal devices 1 to 9. The third set may be a subset of a set of downlink OAM mode information supported by the cell 81. Similarly, the second set may also be a subset of a set of downlink OAM mode information corresponding to the edge terminal devices in the cell 82.

In addition, a set of uplink OAM mode information corresponding to central terminal devices in each cell may be a set of uplink OAM mode information supported by the cell. A set of downlink OAM mode information corresponding to the central terminal devices in each cell may be a set of downlink OAM mode information supported by the cell.

It should be noted that a radio electromagnetic wave whose OAM mode information is 0 is not an OAM wave. Therefore, in this embodiment of this application, the OAM mode information -1 and the OAM mode information 1 may be considered as consecutive OAM mode information. An OAM mode information interval between the OAM mode information -1 and the OAM mode information 1 is Δ*l* = 1. An OAM mode information interval between the OAM mode information -1 and the OAM mode information 2 is Δ*l* = 2.

With reference to FIG. 8, the following describes uplink OAM mode information or downlink OAM mode information corresponding to adjacent terminal devices among the cell 81, the cell 82, and the cell 83. As shown in FIG. 8, the terminal device 1 and the terminal device 2 in the cell 81 are adjacent to the terminal device 12 and the terminal device 13 in the cell 82. The terminal device 8 and the terminal device 9 in the cell 81 are adjacent to the terminal device 10 and the terminal device 11 in the cell 83. The terminal device 15 and a terminal device 16 in the cell 82 are adjacent to a terminal device 17 and a terminal device 18 in the cell 83. The uplink OAM mode information or the downlink OAM mode information corresponding to the terminal device 1, the terminal device 2, the terminal device 8, and the terminal device 9 forms a set *lA*, uplink OAM mode information or downlink OAM mode information corresponding to the terminal device 12, the terminal device 13, the terminal device 15, and the terminal device 16 forms a set *lB*, and uplink OAM mode information or downlink OAM mode information corresponding to the terminal device 10, the terminal device 11, the terminal device 17, and the terminal device 18 forms a set *lC.*

In a possible implementation, the OAM mode information included in each of *lA*, *lB*, and *lC* is consecutive. For example,*lA* = {-4,-3,-2,-1}, *lB* = {1,2,3}, and *lC* = {4,5,6,7,8}. In addition, *lA*, *lB*, and *lC* are orthogonal to each other. In this way, mutual interference among the cell 81, the cell 82, and the cell 83 can be reduced. Specifically, *lA*, *lB*, and *lC* are consecutive. For example, *lA* and *lB* are consecutive, and *lB* and *lC* are consecutive. In addition, *lA* may alternatively be represented by using an initial value -4 of the OAM mode information, an interval Δ*l* = 1 of the OAM mode information, and a quantity 4 of pieces of OAM mode information. *lB* may alternatively be represented by using an initial value 1 of the OAM mode information, an interval Δ*l* = 1 of the OAM mode information, and a quantity 4 of pieces of OAM mode information. *lC* may alternatively be represented by using an initial value 4 of the OAM mode information, an interval Δ*l* = 1 of the OAM mode information, and a quantity 4 of pieces of OAM mode information.

In another embodiment, *lA*, *lB*, and *lC* may alternatively be discrete, for example, *lA* = {-4, -3, -2, -1}, *lB* = {2, 3}, and *lC* = {6, 7, 8}, where an OAM mode information interval between *lA* and *lB* is Δ*l* = 2, and an OAM mode information interval between *lB* and *lC* is Δ*l* = 3. Intervals among *lA*, *lB*, and *lC* can reduce energy leakage of OAM waves separately used by terminal devices that belong to different cells and that are adjacent to each other in adjacent cells, and further reduce signal interference between the terminal devices that belong to the different cells and that are adjacent to each other in the adjacent cells.

In another possible implementation, the OAM mode information included in each of *lA*, *lB*, and *lC* is discrete. For example, *lA* = {-4, -1, 3, 6}, *lB* = {-3, 1, 4, 7}, and *lC* = {-2, 2, 5, 8}. In addition, *lA*, *lB*, and *lC* are orthogonal to each other. In this way, mutual interference among the cell 81, the cell 82, and the cell 83 can be reduced. In addition, *lA* may alternatively be represented by using an initial value -4 of the OAM mode information, an interval Δ*l* = 3 of the OAM mode information, and a quantity 4 of pieces of OAM mode information. *lB* may alternatively be represented by using an initial value -3 of the OAM mode information, an interval Δ*l* = 3 of the OAM mode information, and a quantity 4 of pieces of OAM mode information. *lC* may alternatively be represented by using an initial value -2 of the OAM mode information, an interval Δ*l* = 3 of the OAM mode information, and a quantity 4 of pieces of OAM mode information.

In another embodiment, OAM mode information intervals corresponding to *lA*, *lB*, and *lC* may be different. For example, *lA* = {-4, -1, 1, 4}, *lB* = {-5, 2, 2, 5}, and *lC* = {-6, -3, 3, 6}, where OAM mode information intervals corresponding to *lA* include Δ*l* = 1 and Δ*l* = 3 , OAM mode information intervals corresponding to *lB* include Δ*l* = 3, and OAM mode information intervals corresponding to *lC* include Δ*l* = 3 and Δ*l* = 5. *lA*, *lB*, and *lC* each include mutually-symmetric OAM mode information. For example, -4 and 4 included in *lA* are mutually-symmetric OAM mode information, and -1 and 1 included in *lA* are mutually-symmetric OAM mode information. Phases of OAM waves corresponding to the mutually-symmetric OAM mode information are exactly opposite, in other words, wavefront phases are exactly directionally-symmetric. In this way, implementation complexity can be reduced, good orthogonality can be ensured, and signal interference between edge terminal devices in a cell can be further reduced.

In another possible implementation, the OAM mode information included in each of *lA*, *lB*, and *lC* is partially consecutive and partially discrete. For example, *lA* = {-4, -3, -2, 4}, where -4, -3, -2 are consecutive, and a subset {-4, -3, -2} and 4 are discrete; *lB* = {1, 2, 3,8}, where 1, 2, 3 are consecutive, and a subset {1, 2, 3} and 8 are discrete; and *lC* = {-1, 5, 6, 7}, where 5, 6, 7 are consecutive, and a subset {5, 6, 7} and -1 are discrete.

In addition, each of *lA*, *lB*, and *lC* may alternatively include a plurality of consecutive OAM mode information subsets, and the plurality of consecutive OAM mode information subsets are discrete, for example, *lA* = {-2, -1, 1, 2}, where -2, -1 are consecutive, 1,2 are consecutive, and a subset {-2, -1} and a subset {1,2} are discrete; *lB* = {-6, -5, 5, 6}, where -6, -5 are consecutive, 5,6 are consecutive, and a subset {-6, -5} and a subset {5, 6} are discrete; and *lC* = {-10, -9, 9, 10}, where -10, -9 are consecutive, 9,10 are consecutive, and a subset {-10, -9} and a subset {9,10} are discrete. In addition, an interval between any piece of OAM mode information in *lA* and any piece of OAM mode information in *lB* is greater than or equal to a preset interval 3, an interval between any piece of OAM mode information in *lB* and any piece of OAM mode information in *lC* is greater than or equal to the preset interval 3, and an interval between any one piece of OAM mode information in *lA* and any one piece of OAM mode information in *lC* is greater than or equal to the preset interval 3. In this way, energy leakage of OAM waves separately used by terminal devices that belong to different cells and that are adjacent to each other in adjacent cells can be reduced, and signal interference between the terminal devices that belong to the different cells and that are adjacent to each other in the adjacent cells is further reduced.

It may be understood that a specific value of OAM mode information in a set described above is merely an example for description, and is not specifically limited.

It may be understood that a part or all of the steps or operations in the foregoing embodiments are merely examples. Other operations or variations of various operations may alternatively be performed in embodiments of this application. In addition, the steps may be performed in a sequence different from that presented in the foregoing embodiments, and not all operations in the foregoing embodiments may need to be performed.

It may be understood that in the foregoing embodiments, methods or steps implemented by the terminal device may alternatively be implemented by a component (for example, a chip or a circuit) that can be used in the terminal device, and methods or steps implemented by the network device may alternatively be implemented by a component (for example, a chip or a circuit) that can be used in the network device.

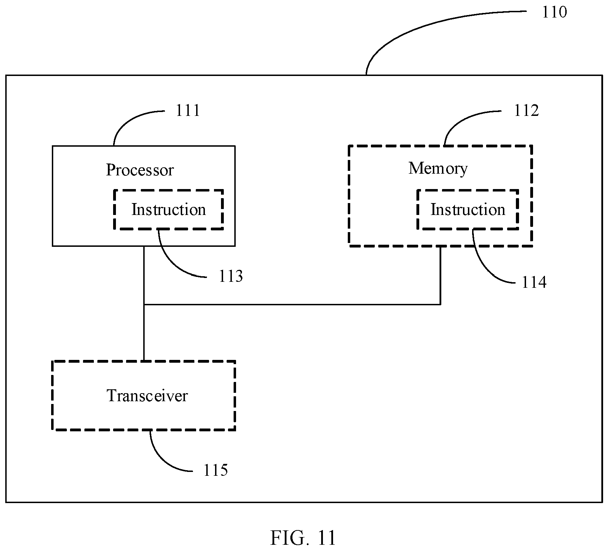

FIG. 11 is a schematic diagram of a structure of a communication apparatus. The communication apparatus may be configured to implement the method corresponding to the network device or the method corresponding to the terminal device (for example, the first terminal device) described in the foregoing method embodiments. For details, refer to the descriptions in the foregoing method embodiments.

The communication apparatus 110 may include one or more processors 111. The processor 111 may also be referred to as a processing unit, and may implement a specific control function. The processor 111 may be a general-purpose processor, a dedicated processor, or the like.

In an optional design, the processor 111 may alternatively store instructions 113, and the instructions may be run by the processor, so that the communication apparatus 110 performs the method corresponding to the terminal device or the network device described in the foregoing method embodiments.

In another possible design, the communication apparatus 110 may include a circuit. The circuit may implement a sending, receiving, or communication function in the foregoing method embodiments.

Optionally, the communication apparatus 110 may include one or more memories 112. The memory stores instructions 114 or intermediate data. The instructions 114 may be run on the processor, so that the communication apparatus 110 performs the method in the foregoing method embodiments. Optionally, the memory may further store other related data. Optionally, the processor may also store instructions and/or data. The processor and the memory may be separately disposed, or may be integrated together.

Optionally, the communication apparatus 110 may further include a transceiver 115.

The processor 111 may be referred to as the processing unit. The transceiver 115 may be referred to as a transceiver unit, a transceiver machine, a transceiver circuit, a transceiver, or the like, and is configured to implement a transceiver function of the communication apparatus.

If the communication apparatus is configured to implement an operation corresponding to the network device in FIG. 9, for example, the transceiver may send, to a first network device, uplink OAM mode information and/or downlink OAM mode information corresponding to the first network device, the transceiver may further complete another corresponding communication function. The processor is configured to complete a corresponding determining or control operation, and optionally, may further store a corresponding instruction in the memory. For a specific processing manner of each component, refer to related descriptions in the foregoing embodiments.

If the communication apparatus is configured to implement an operation corresponding to the first network device in FIG. 9, for example, the transceiver may receive, from the network device, the uplink OAM mode information and/or the downlink OAM mode information corresponding to the first network device, the transceiver may further complete another corresponding communication function. The processor is configured to complete a corresponding determining or control operation, and optionally, may further store a corresponding instruction in the memory. For a specific processing manner of each component, refer to related descriptions in the foregoing embodiments.

The processor and the transceiver in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may also be manufactured by using various IC technologies, for example, a complementary metal oxide semiconductor (complementary metal oxide semiconductor, CMOS), an N-channel metal oxide semiconductor (N-channel Metal oxide semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

Optionally, the communication apparatus may be an independent device or may be a part of a large device. For example, the device may be:
(1) an independent integrated circuit IC, a chip, or a chip system or subsystem;
(2) a set having one or more ICs, where optionally, the IC set may further include a storage component configured to store data and/or instructions;
(3) an ASIC, for example, a modem (MSM);
(4) a module that can be embedded in another device;
(5) a receiver, a terminal device, a cellular phone, a wireless device, a handheld phone, a mobile unit, or a network device; or
(6) another device, or the like.

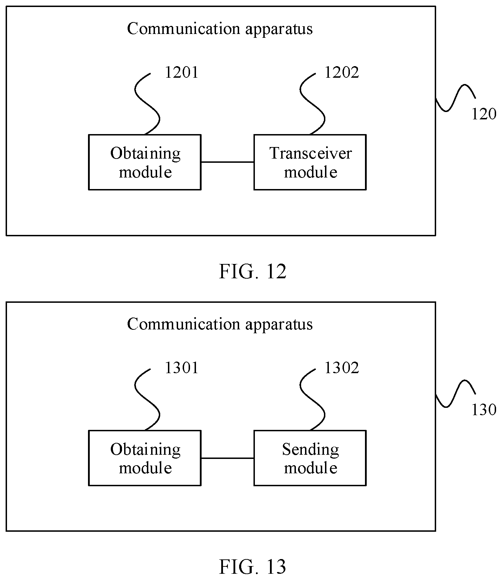

FIG. 12 is a schematic diagram of a structure of another communication apparatus according to an embodiment of this application. As shown in FIG. 12, the communication apparatus 120 includes an obtaining module 1201 and a transceiver module 1202. The obtaining module 1201 is configured to obtain uplink OAM mode information and/or downlink OAM mode information. The transceiver module 1202 is configured to send uplink data based on an uplink OAM mode corresponding to the uplink OAM mode information, and/or receive downlink data based on a downlink OAM mode corresponding to the downlink OAM mode information. The uplink OAM mode information corresponding to the communication apparatus is different from uplink OAM mode information corresponding to at least one second terminal device, the downlink OAM mode information corresponding to the communication apparatus is different from downlink OAM mode information corresponding to the at least one second terminal device, the communication apparatus is in a first cell, the at least one second terminal device is in a second cell, and the communication apparatus is adjacent to the at least one second terminal device.

In FIG. 12, further, uplink OAM mode information corresponding to at least one third terminal device adjacent to the communication apparatus in the first cell and the uplink OAM mode information corresponding to the communication apparatus form a first set, and the uplink OAM mode information corresponding to the at least one second terminal device forms a second set; or downlink OAM mode information corresponding to at least one third terminal device and the downlink OAM mode information corresponding to the communication apparatus form a first set, and the downlink OAM mode information corresponding to the at least one second terminal device forms a second set. The OAM mode information in the first set is consecutive; or the OAM mode information in the first set is discrete; or the OAM mode information in the first set is partially consecutive and partially discrete.

Optionally, the uplink OAM mode information corresponding to the communication apparatus is different from the downlink OAM mode information corresponding to the at least one second terminal device, and the downlink OAM mode information corresponding to the communication apparatus is different from the uplink OAM mode information corresponding to the at least one second terminal device.

Optionally, uplink OAM mode information corresponding to at least one third terminal device adjacent to the communication apparatus in the first cell and the uplink OAM mode information corresponding to the communication apparatus form a first set, and the downlink OAM mode information corresponding to the at least one second terminal device forms a second set; or downlink OAM mode information corresponding to at least one third terminal device and the downlink OAM mode information corresponding to the communication apparatus form a first set, and the uplink OAM mode information corresponding to the at least one second terminal device forms a second set. The OAM mode information in the first set is consecutive; or the OAM mode information in the first set is discrete; or the OAM mode information in the first set is partially consecutive and partially discrete.

Optionally, when there are a plurality of intervals between adjacent OAM mode information in the first set, the plurality of intervals are the same, or the plurality of intervals are different, or the plurality of intervals are partially the same and partially different.

Optionally, when the OAM mode information in the first set is consecutive, and the OAM mode information in the second set is consecutive, an interval between the first set and the second set is greater than or equal to a preset interval.

Optionally, the first set is a subset of a third set, and the third set is a set of uplink OAM mode information or downlink OAM mode information corresponding to edge terminal devices in the first cell.

Optionally, the third set is a subset of a set of uplink OAM mode information supported by the first cell, or the third set is a subset of a set of downlink OAM mode information supported by the first cell.

Optionally, the uplink OAM mode information corresponding to the at least one third terminal device adjacent to the first terminal device in the first cell is different from or the same as the uplink OAM mode information corresponding to the first terminal device, and the downlink OAM mode information corresponding to the at least one third terminal device is different from or the same as the downlink OAM mode information corresponding to the first terminal device.

Optionally, the uplink OAM mode information corresponding to the at least one third terminal device adjacent to the first terminal device in the first cell is different from or the same as the downlink OAM mode information corresponding to the first terminal device, and the downlink OAM mode information corresponding to the at least one third terminal device is different from or the same as the uplink OAM mode information corresponding to the first terminal device.

Optionally, when the OAM mode information in the first set is partially consecutive and partially discrete, a plurality of consecutive OAM mode information subsets in the first set are discrete.

Optionally, the first set includes mutually-symmetric OAM mode information.

The communication apparatus in the embodiment shown in FIG. 12 may be configured to execute the technical solutions in the foregoing method embodiments. For an implementation principle and technical effect of the communication apparatus, further refer to related descriptions in the method embodiments. Optionally, the communication apparatus may be a terminal device (for example, the first terminal device), or may be a component (for example, a chip or a circuit) of the terminal device.

FIG. 13 is a schematic diagram of a structure of another communication apparatus according to an embodiment of this application. As shown in FIG. 13, the communication apparatus 130 includes an obtaining module 1301 and a sending module 1302. The obtaining module 1301 is configured to obtain uplink OAM mode information and/or downlink OAM mode information corresponding to a first terminal device. The sending module 1302 is configured to send, to the first terminal device, the uplink OAM mode information and/or the downlink OAM mode information corresponding to the first terminal device. The uplink OAM mode information corresponding to the first terminal device is used by the first terminal device to send uplink data, and the downlink OAM mode information corresponding to the first terminal device is used by the first terminal device to receive downlink data. The uplink OAM mode information corresponding to the first terminal device is different from uplink OAM mode information corresponding to at least one second terminal device, the downlink OAM mode information corresponding to the first terminal device is different from downlink OAM mode information corresponding to the at least one second terminal device, the first terminal device is in a first cell, the at least one second terminal device is in a second cell, and the first terminal device is adjacent to the at least one second terminal device.

In FIG. 13, further, uplink OAM mode information corresponding to at least one third terminal device adjacent to the first terminal device in the first cell and the uplink OAM mode information corresponding to the first terminal device form a first set, and the uplink OAM mode information corresponding to the at least one second terminal device forms a second set; or downlink OAM mode information corresponding to at least one third terminal device and the downlink OAM mode information corresponding to the first terminal device form a first set, and the downlink OAM mode information corresponding to the at least one second terminal device forms a second set. The OAM mode information in the first set is consecutive; or the OAM mode information in the first set is discrete; or the OAM mode information in the first set is partially consecutive and partially discrete.

Optionally, the uplink OAM mode information corresponding to the first terminal device is different from the downlink OAM mode information corresponding to the at least one second terminal device, and the downlink OAM mode information corresponding to the first terminal device is different from the uplink OAM mode information corresponding to the at least one second terminal device.

Optionally, uplink OAM mode information corresponding to at least one third terminal device adjacent to the first terminal device in the first cell and the uplink OAM mode information corresponding to the first terminal device form a first set, and the downlink OAM mode information corresponding to the at least one second terminal device forms a second set; or downlink OAM mode information corresponding to at least one third terminal device and the downlink OAM mode information corresponding to the first terminal device form a first set, and the uplink OAM mode information corresponding to the at least one second terminal device forms a second set. The OAM mode information in the first set is consecutive; or the OAM mode information in the first set is discrete; or the OAM mode information in the first set is partially consecutive and partially discrete.

Optionally, when there are a plurality of intervals between adjacent OAM mode information in the first set, the plurality of intervals are the same, or the plurality of intervals are different, or the plurality of intervals are partially the same and partially different.

Optionally, when the OAM mode information in the first set is consecutive, and the OAM mode information in the second set is consecutive, an interval between the first set and the second set is greater than or equal to a preset interval.

Optionally, the first set is a subset of a third set, and the third set is a set of uplink OAM mode information or downlink OAM mode information corresponding to edge terminal devices in the first cell.

Optionally, the third set is a subset of a set of uplink OAM mode information supported by the first cell, or the third set is a subset of a set of downlink OAM mode information supported by the first cell.

Optionally, the uplink OAM mode information corresponding to the at least one third terminal device adjacent to the first terminal device in the first cell is different from or the same as the uplink OAM mode information corresponding to the first terminal device, and the downlink OAM mode information corresponding to the at least one third terminal device is different from or the same as the downlink OAM mode information corresponding to the first terminal device.

Optionally, the uplink OAM mode information corresponding to the at least one third terminal device adjacent to the first terminal device in the first cell is different from or the same as the downlink OAM mode information corresponding to the first terminal device, and the downlink OAM mode information corresponding to the at least one third terminal device is different from or the same as the uplink OAM mode information corresponding to the first terminal device.

Optionally, when the OAM mode information in the first set is partially consecutive and partially discrete, a plurality of consecutive OAM mode information subsets in the first set are discrete.

Optionally, the first set includes mutually-symmetric OAM mode information.

The communication apparatus in the embodiment shown in FIG. 13 may be configured to execute the technical solutions in the foregoing method embodiments. For an implementation principle and technical effect of the communication apparatus, further refer to corresponding descriptions in the method embodiments. Details are not described herein again. Optionally, the communication apparatus may be a network device, or may be a component (for example, a chip or a circuit) of a network device.

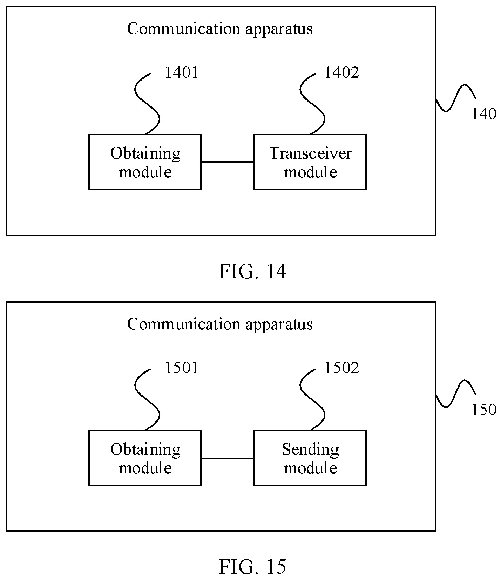

FIG. 14 is a schematic diagram of a structure of another communication apparatus according to an embodiment of this application. As shown in FIG. 14, the communication apparatus 140 includes an obtaining module 1401 and a transceiver module 1402. The obtaining module 1401 is configured to obtain uplink OAM mode information and/or downlink OAM mode information. The transceiver module 1402 is configured to send uplink data based on an uplink OAM mode corresponding to the uplink OAM mode information, and/or receive downlink data based on a downlink OAM mode corresponding to the downlink OAM mode information. The uplink OAM mode information corresponding to the communication apparatus is different from downlink OAM mode information corresponding to at least one second terminal device, the downlink OAM mode information corresponding to the communication apparatus is different from uplink OAM mode information corresponding to the at least one second terminal device, the communication apparatus is in a first cell, the at least one second terminal device is in a second cell, and the communication apparatus is adjacent to the at least one second terminal device.

Optionally, uplink OAM mode information corresponding to at least one third terminal device adjacent to the communication apparatus in the first cell and the uplink OAM mode information corresponding to the communication apparatus form a first set, and the downlink OAM mode information corresponding to the at least one second terminal device forms a second set; or downlink OAM mode information corresponding to at least one third terminal device and the downlink OAM mode information corresponding to the communication apparatus form a first set, and the uplink OAM mode information corresponding to the at least one second terminal device forms a second set. The OAM mode information in the first set is consecutive; or the OAM mode information in the first set is discrete; or the OAM mode information in the first set is partially consecutive and partially discrete.

Optionally, when there are a plurality of intervals between adjacent OAM mode information in the first set, the plurality of intervals are the same, or the plurality of intervals are different, or the plurality of intervals are partially the same and partially different.

Optionally, when the OAM mode information in the first set is consecutive, and the OAM mode information in the second set is consecutive, an interval between the first set and the second set is greater than or equal to a preset interval.

Optionally, the first set is a subset of a third set, and the third set is a set of uplink OAM mode information or downlink OAM mode information corresponding to edge terminal devices in the first cell.

Optionally, the third set is a subset of a set of uplink OAM mode information supported by the first cell, or the third set is a subset of a set of downlink OAM mode information supported by the first cell.

Optionally, the uplink OAM mode information corresponding to at least one third terminal device adjacent to the first terminal device in the first cell is different from or the same as the uplink OAM mode information corresponding to the first terminal device, and the downlink OAM mode information corresponding to the at least one third terminal device is different from or the same as the downlink OAM mode information corresponding to the first terminal device.

Optionally, the uplink OAM mode information corresponding to the at least one third terminal device adjacent to the first terminal device in the first cell is different from or the same as the downlink OAM mode information corresponding to the first terminal device; and the downlink OAM mode information corresponding to the at least one third terminal device is different from or the same as the uplink OAM mode information corresponding to the first terminal device.

Optionally, when the OAM mode information in the first set is partially consecutive and partially discrete, a plurality of consecutive OAM mode information subsets in the first set are discrete.

Optionally, the first set includes mutually-symmetric OAM mode information.

The communication apparatus in the embodiment shown in FIG. 14 may be configured to execute the technical solutions in the foregoing method embodiments. For an implementation principle and technical effect of the communication apparatus, further refer to related descriptions in the method embodiments. Optionally, the communication apparatus may be a terminal device (for example, a first terminal device), or may be a component (for example, a chip or a circuit) of the terminal device.

FIG. 15 is a schematic diagram of a structure of another communication apparatus according to an embodiment of this application. As shown in FIG. 15, the communication apparatus 150 includes an obtaining module 1501 and a sending module 1502. The obtaining module 1501 is configured to obtain uplink OAM mode information and/or downlink OAM mode information corresponding to a first terminal device. The sending module 1502 is configured to send, to the first terminal device, the uplink OAM mode information and/or the downlink OAM mode information corresponding to the first terminal device. The uplink OAM mode information corresponding to the first terminal device is used by the first terminal device to send uplink data, and the downlink OAM mode information corresponding to the first terminal device is used by the first terminal device to receive downlink data. The uplink OAM mode information corresponding to the first terminal device is different from downlink OAM mode information corresponding to at least one second terminal device, the downlink OAM mode information corresponding to the first terminal device is different from uplink OAM mode information corresponding to the at least one second terminal device, the first terminal device is in a first cell, the at least one second terminal device is in a second cell, and the first terminal device is adjacent to the at least one second terminal device.

Optionally, uplink OAM mode information corresponding to at least one third terminal device adjacent to the first terminal device in the first cell and the uplink OAM mode information corresponding to the first terminal device form a first set, and the downlink OAM mode information corresponding to the at least one second terminal device forms a second set; or downlink OAM mode information corresponding to at least one third terminal device and the downlink OAM mode information corresponding to the first terminal device form a first set, and the uplink OAM mode information corresponding to the at least one second terminal device forms a second set. The OAM mode information in the first set is consecutive; or the OAM mode information in the first set is discrete; or the OAM mode information in the first set is partially consecutive and partially discrete.

Optionally, when there are a plurality of intervals between adjacent OAM mode information in the first set, the plurality of intervals are the same, or the plurality of intervals are different, or the plurality of intervals are partially the same and partially different.

Optionally, when the OAM mode information in the first set is consecutive, and the OAM mode information in the second set is consecutive, an interval between the first set and the second set is greater than or equal to a preset interval.

Optionally, the first set is a subset of a third set, and the third set is a set of uplink OAM mode information or downlink OAM mode information corresponding to edge terminal devices in the first cell.

Optionally, the third set is a subset of a set of uplink OAM mode information supported by the first cell, or the third set is a subset of a set of downlink OAM mode information supported by the first cell.

Optionally, the uplink OAM mode information corresponding to the at least one third terminal device adjacent to the first terminal device in the first cell is different from or the same as the uplink OAM mode information corresponding to the first terminal device, and the downlink OAM mode information corresponding to the at least one third terminal device is different from or the same as the downlink OAM mode information corresponding to the first terminal device.

Optionally, the uplink OAM mode information corresponding to the at least one third terminal device adjacent to the first terminal device in the first cell is different from or the same as the downlink OAM mode information corresponding to the first terminal device, and the downlink OAM mode information corresponding to the at least one third terminal device is different from or the same as the uplink OAM mode information corresponding to the first terminal device.

Optionally, when the OAM mode information in the first set is partially consecutive and partially discrete, a plurality of consecutive OAM mode information subsets in the first set are discrete.

Optionally, the first set includes mutually-symmetric OAM mode information.

The communication apparatus in the embodiment shown in FIG. 15 may be configured to execute the technical solutions in the foregoing method embodiments. For an implementation principle and technical effect of the communication apparatus, further refer to corresponding descriptions in the method embodiments. Details are not described herein again. Optionally, the communication apparatus may be a network device, or may be a component (for example, a chip or a circuit) of a network device.

It should be understood that division into the foregoing modules of the communication apparatus shown in FIG. 12 to FIG. 15 is merely logical function division. In actual implementation, all or a part of the modules may be integrated into one physical entity, or may be physically separated. In addition, all of the modules may be implemented in a form of software invoked by a processing element or in a form of hardware. Alternatively, a part of the modules may be implemented in a form of software invoked by a processing element, and a part of the modules may be implemented in a form of hardware. For example, the obtaining module may be an independently disposed processing element, or may be integrated into a communication apparatus, for example, a chip of a network device for implementation. In addition, the obtaining module may be stored in a memory of the communication apparatus in a form of a program to be invoked by a processing element of the communication apparatus to perform a function of each of the foregoing modules. An implementation of another module is similar to the implementation of the obtaining module. In addition, all or a part of these modules may be integrated together, or may be implemented independently. The processing element herein may be an integrated circuit and has a signal processing capability. In an implementation process, steps in the foregoing methods or the foregoing modules may be implemented by using a hardware integrated logical circuit in the processing element, or by using instructions in a form of software.

For example, the foregoing modules may be one or more integrated circuits configured to implement the foregoing methods, for example, one or more application-specific integrated circuits (Application-Specific Integrated Circuit, ASIC), one or more microprocessors (digital signal processor, DSP), or one or more field programmable gate arrays (Field Programmable Gate Array, FPGA). For another example, when one of the foregoing modules is implemented in a form of scheduling a program by a processing element, the processing element may be a general-purpose processor, for example, a central processing unit (Central Processing Unit, CPU) or another processor that can invoke the program. For another example, the modules may be integrated together, and implemented in a form of a system-on-a-chip (system-on-a-chip, SoC).

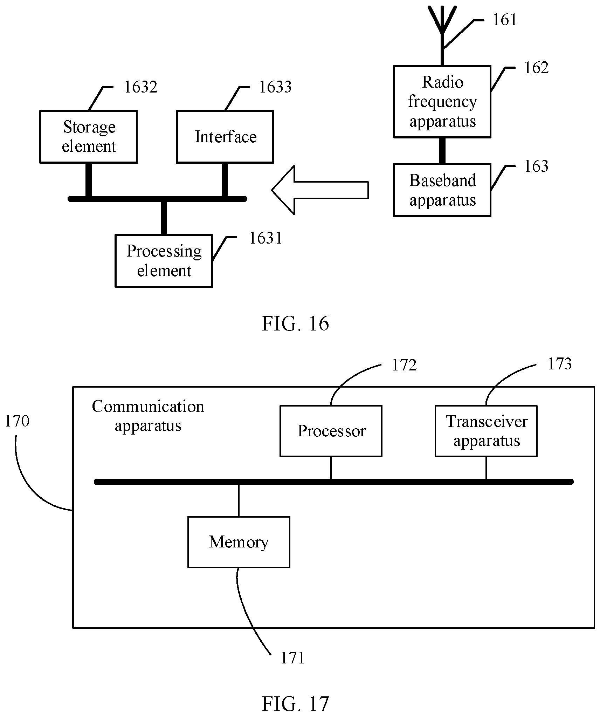

FIG. 16 is a schematic diagram of a structure of still another communication apparatus according to an embodiment of this application. The communication apparatus may be specifically a base station. As shown in FIG. 16, the base station includes an antenna 161, a radio frequency apparatus 162, and a baseband apparatus 163. The antenna 161 is connected to the radio frequency apparatus 162. In an uplink direction, the radio frequency apparatus 162 receives, through the antenna 161, information sent by a terminal device, and sends, to the baseband apparatus 163, the information sent by the terminal device for processing. In a downlink direction, the baseband apparatus 163 processes the information about the terminal device, and sends the information to the radio frequency apparatus 162. The radio frequency apparatus 162 processes the information about the terminal device, and then sends processed information to the terminal device through the antenna 161.

The foregoing communication apparatus may be located in the baseband apparatus 163. In an implementation, the foregoing modules are implemented by scheduling a program by a processing element. For example, the baseband apparatus 163 includes a processing element and a storage element, and the processing element 1631 invokes a program stored in the storage element 1632, to perform the method in the foregoing method embodiments. In addition, the baseband apparatus 163 may further include an interface 1633, configured to exchange information with the radio frequency apparatus 162. The interface is, for example, a common public radio interface (common public radio interface, CPRI).

In another implementation, the foregoing modules may be one or more processing elements configured to implement the foregoing method, and the processing elements are arranged on the baseband apparatus 163. The processing element herein may be an integrated circuit, for example, one or more ASICs, one or more DSPs, or one or more FPGAs. The integrated circuits may be integrated together to form a chip.

For example, the foregoing modules may be integrated in a form of a system-on-a-chip (system-on-a-chip, SoC). For example, the baseband apparatus 163 includes a SoC chip, configured to implement the foregoing method. The processing element 1631 and the storage element 1632 may be integrated into the chip, and the processing element 1631 invokes the program stored in the storage element 1632, to implement the foregoing method or functions of the foregoing modules. Alternatively, at least one integrated circuit may be integrated in the chip to implement the foregoing method or functions of the foregoing modules. Alternatively, the foregoing implementations may be combined, so that functions of a part of modules are implemented by invoking the program by the processing element, and functions of a part of modules are implemented by using an integrated circuit.

Regardless of a manner, the communication apparatus includes at least one processing element, a storage element, and a communication interface, and the at least one processing element is configured to perform the method provided in the foregoing method embodiments. The processing element may perform a part or all of the steps in the foregoing method embodiments in a first manner of executing the program stored in the storage element, or in a second manner, to be specific, a manner of using a hardware integrated logic circuit in the processing element in combination with instructions. Certainly, the method provided in the foregoing method embodiments may alternatively be performed by combining the first manner with the second manner.

As described above, the processing element herein may be a general-purpose processor such as a central processing unit (Central Processing Unit, CPU), or may be one or more integrated circuits configured to implement the foregoing method, for example, one or more application-specific integrated circuits (Application-Specific Integrated Circuit, ASIC), one or more microprocessors (digital signal processor, DSP), or one or more field programmable gate arrays (Field Programmable Gate Array, FPGA). The storage element may be one memory, or may be a general term of a plurality of storage elements.

FIG. 17 is a schematic diagram of a structure of another communication apparatus according to an embodiment of this application. As shown in FIG. 17, a communication apparatus 170 includes a processor 172 and a transceiver apparatus 173. The transceiver apparatus 173 may alternatively be a transceiver. The transceiver apparatus 173 receives, from a network device, uplink OAM mode information and/or downlink OAM mode information corresponding to the communication apparatus. Further, the apparatus further includes a memory 171, configured to store a computer program or instructions. The processor 172 is configured to invoke the computer program or the instructions.

The communication apparatus in the embodiment shown in FIG. 17 may be configured to execute the technical solutions in the foregoing method embodiments. For an implementation principle and technical effect of the communication apparatus, further refer to related descriptions in the method embodiments. Details are not described herein again. The communication apparatus may be a terminal device (for example, a first terminal device), or may be a component (for example, a chip or a circuit) of a terminal device.

In FIG. 17, the transceiver apparatus 173 may be connected to an antenna. In a downlink direction, the transceiver apparatus 173 receives, through the antenna, information sent by a base station, and sends the information to the processor 172 for processing. In an uplink direction, the processor 172 processes data of the terminal device, and sends processed data to the base station by using the transceiver apparatus 173.

Optionally, the transceiver apparatus may be configured to implement a corresponding function of the transceiver module 1202 of the communication apparatus shown in FIG. 12 or the transceiver module 1402 of the communication apparatus shown in FIG. 14. Alternatively, a part or all of the foregoing modules may be implemented in a form of an integrated circuit that is embedded in a chip of the terminal device. In addition, they may be separately implemented, or may be integrated together. In other words, the modules may be one or more integrated circuits configured to implement the foregoing method, for example, one or more application-specific integrated circuits (Application-Specific Integrated Circuit, ASIC), one or more microprocessors (digital signal processor, DSP), or one or more field programmable gate arrays (Field Programmable Gate Array, FPGA).

An embodiment of this application further provides a computer-readable storage medium, including a computer program or instructions. When the computer program or the instructions is/are run on a computer, the signal interference coordination method in the foregoing embodiments is performed.

In addition, an embodiment of this application further provides a computer program, including a program or instructions. When the program or the instructions is/are run on a computer, the signal interference coordination method in the foregoing embodiments is performed.

Optionally, all or a part of the computer program may be stored in a storage medium encapsulated with a processor, or may be stored in a memory that is not encapsulated with a processor.

In addition, an embodiment of this application further provides a computer program product. The computer program product includes a computer program or instructions. When the computer program or the instructions is/are run on a computer, the signal interference coordination method in the foregoing embodiments is performed.

In addition, an embodiment of this application further provides a processor. The processor includes at least one circuit, configured to perform the signal interference coordination method in the foregoing embodiments.

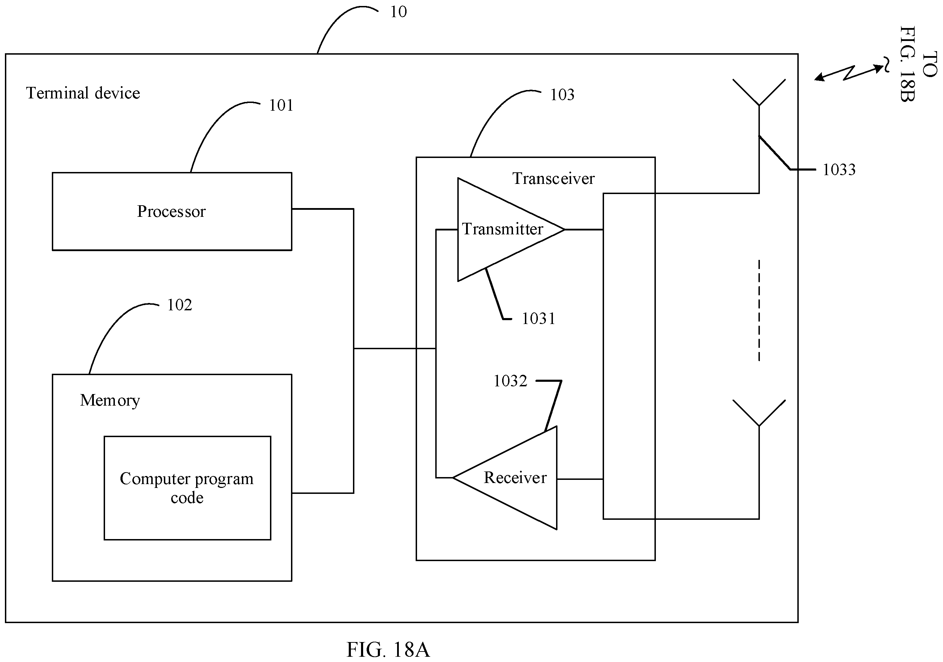

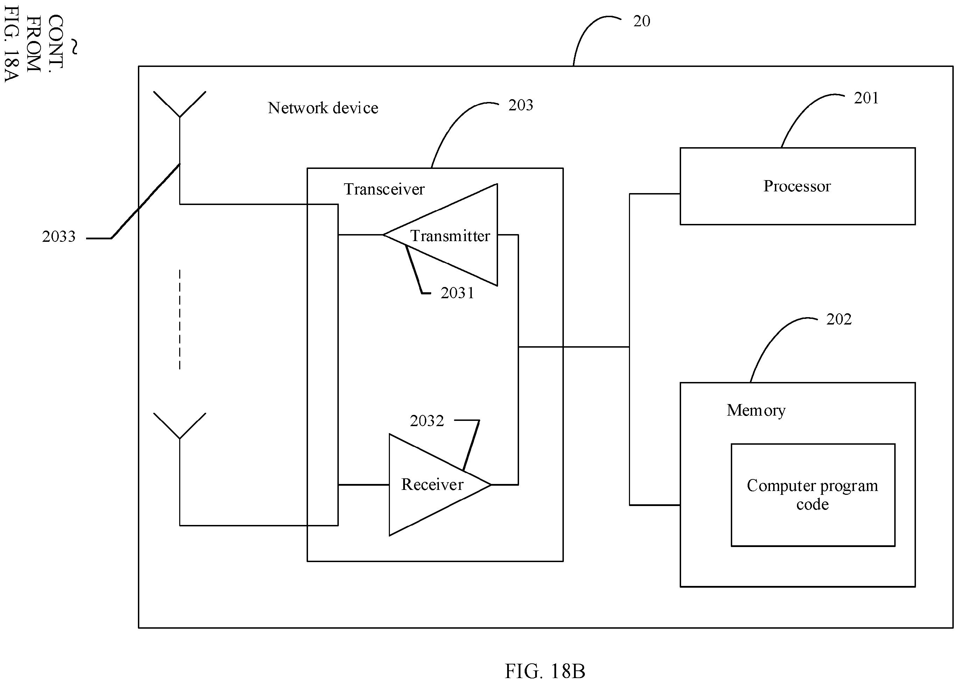

In addition, an embodiment of this application further provides a system. The system includes the terminal device and the network device described above. As shown in FIG. 18A and FIG. 18B, a terminal device 10 includes a processor 101, a memory 102, and a transceiver 103. The transceiver 103 includes a transmitter 1031, a receiver 1032, and an antenna 1033. A network device 20 includes a processor 201, a memory 202, and a transceiver 203. The transceiver 203 includes a transmitter 2031, a receiver 2032, and an antenna 2033. The receiver 1032 may be configured to receive transmission control information through the antenna 1033, and the transmitter 1031 may be configured to send transmission feedback information to the network device 20 through the antenna 1033. The transmitter 2031 may be configured to send transmission control information to the terminal device 10 through the antenna 2033, and the receiver 2032 may be configured to receive transmission feedback information sent by the terminal device 10 through the antenna 2033.

All or a part of foregoing embodiments may be implemented by using software, hardware, firmware, or any combination thereof. When the software is used for implementing embodiments, all or a part of embodiments may be implemented in a form of a computer program product. The computer program product includes one or more computer instructions. When the computer program instructions are loaded and executed on the computer, all or a part of the procedures or functions in this application are generated. The computer may be a general-purpose computer, a dedicated computer, a computer network, or other programmable apparatuses. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk)), or the like.

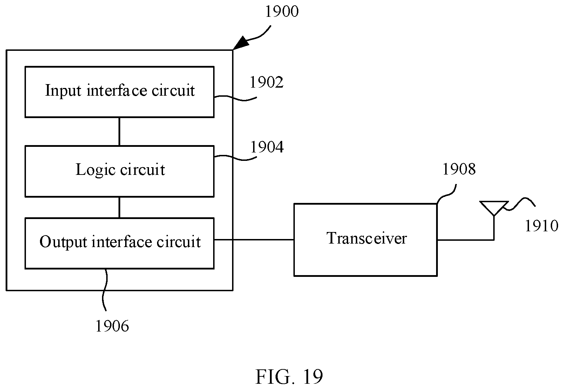

Based on a same inventive concept as the method provided in the foregoing embodiments of this application, an embodiment of this application further provides a communication apparatus, configured to implement the method in the foregoing embodiments. The communication apparatus may be a terminal device or a network device, or may be a component (for example, a chip or a circuit) of a terminal device or a network device. Some or all of the methods in the foregoing embodiments may be implemented by hardware or may be implemented by software. When the methods are implemented by hardware, refer to FIG. 19. A communication apparatus 1900 includes an input interface circuit 1902, a logic circuit 1904, and an output interface circuit 1906. In addition, the communication apparatus 1900 further includes a transceiver 1908 and an antenna 1910. The transceiver 1908 receives and sends data through the antenna 1910.

When the communication apparatus 1900 is a terminal device, the input interface circuit 1902 may be configured to obtain to-be-processed data, where the to-be-processed data may be, for example, uplink OAM mode information and/or downlink OAM mode information corresponding to the terminal device. The logic circuit 1904 is configured to perform the foregoing signal interference coordination method to determine an uplink OAM mode and/or a downlink OAM mode, to obtain processed data. The processed data may be, for example, uplink data that the terminal device needs to send based on the uplink OAM mode, and/or downlink data received based on the downlink OAM mode. The output interface circuit 1906 is configured to output the processed data, for example, the uplink data and/or the downlink data.

When the communication apparatus 1900 is a network device, the input interface circuit 1902 may be configured to obtain to-be-processed data, where the to-be-processed data may be, for example, the uplink OAM mode information and/or the downlink OAM mode information corresponding to the terminal device. The logic circuit 1904 is configured to perform the foregoing signal interference coordination method to determine the uplink OAM mode and/or the downlink OAM mode, to obtain the processed data. The processed data may be, for example, the downlink data that the network device needs to send based on the downlink OAM mode, and/or the uplink data received based on the uplink OAM mode. The output interface circuit 1906 is configured to output the processed data, for example, the uplink data and/or the downlink data.

In a specific implementation, the communication apparatus 1900 may be a chip or an integrated circuit.

## Claims

1. A signal interference coordination method, comprising:
obtaining, by a first terminal device, uplink OAM mode information and/or downlink OAM mode information; and
sending, by the first terminal device, uplink data based on an uplink OAM mode corresponding to the uplink OAM mode information, and/or receiving downlink data based on a downlink OAM mode corresponding to the downlink OAM mode information, wherein
the uplink OAM mode information corresponding to the first terminal device is different from uplink OAM mode information corresponding to at least one second terminal device, the downlink OAM mode information corresponding to the first terminal device is different from downlink OAM mode information corresponding to the at least one second terminal device, the first terminal device is in a first cell, the at least one second terminal device is in a second cell, and the first terminal device is adjacent to the at least one second terminal device.

2. The method according to claim 1, wherein uplink OAM mode information corresponding to at least one third terminal device adjacent to the first terminal device in the first cell and the uplink OAM mode information corresponding to the first terminal device form a first set, and the uplink OAM mode information corresponding to the at least one second terminal device forms a second set; or downlink OAM mode information corresponding to at least one third terminal device and the downlink OAM mode information corresponding to the first terminal device form a first set, and the downlink OAM mode information corresponding to the at least one second terminal device forms a second set, wherein
the OAM mode information in the first set is consecutive; or
the OAM mode information in the first set is discrete; or
the OAM mode information in the first set is partially consecutive and partially discrete.

3. The method according to claim 1, wherein the uplink OAM mode information corresponding to the first terminal device is different from the downlink OAM mode information corresponding to the at least one second terminal device, and the downlink OAM mode information corresponding to the first terminal device is different from the uplink OAM mode information corresponding to the at least one second terminal device.

4. The method according to claim 3, wherein uplink OAM mode information corresponding to at least one third terminal device adjacent to the first terminal device in the first cell and the uplink OAM mode information corresponding to the first terminal device form a first set, and the downlink OAM mode information corresponding to the at least one second terminal device forms a second set; or downlink OAM mode information corresponding to at least one third terminal device and the downlink OAM mode information corresponding to the first terminal device form a first set, and the uplink OAM mode information corresponding to the at least one second terminal device forms a second set, wherein
the OAM mode information in the first set is consecutive; or
the OAM mode information in the first set is discrete; or
the OAM mode information in the first set is partially consecutive and partially discrete.

5. The method according to claim 2 or 4, wherein when there are a plurality of intervals between adjacent OAM mode information in the first set, the plurality of intervals are the same; or
the plurality of intervals are different; or
the plurality of intervals are partially the same and partially different.

6. The method according to claim 2 or 4, wherein when the OAM mode information in the first set is consecutive, and the OAM mode information in the second set is consecutive, an interval between the first set and the second set is greater than or equal to a preset interval.

7. The method according to claim 2 or any one of claims 4 to 6, wherein the first set is a subset of a third set, and the third set is a set of uplink OAM mode information or downlink OAM mode information corresponding to edge terminal devices in the first cell.

8. The method according to claim 7, wherein the third set is a subset of a set of uplink OAM mode information supported by the first cell, or the third set is a subset of a set of downlink OAM mode information supported by the first cell.

9. A signal interference coordination method, comprising:
obtaining, by a network device, uplink OAM mode information and/or downlink OAM mode information corresponding to a first terminal device; and
sending, by the network device to the first terminal device, the uplink OAM mode information and/or the downlink OAM mode information corresponding to the first terminal device, wherein the uplink OAM mode information corresponding to the first terminal device is used by the first terminal device to send uplink data, and the downlink OAM mode information corresponding to the first terminal device is used by the first terminal device to receive downlink data, wherein
the uplink OAM mode information corresponding to the first terminal device is different from uplink OAM mode information corresponding to at least one second terminal device, the downlink OAM mode information corresponding to the first terminal device is different from downlink OAM mode information corresponding to the at least one second terminal device, the first terminal device is in a first cell, the at least one second terminal device is in a second cell, and the first terminal device is adjacent to the at least one second terminal device.

10. The method according to claim 9, wherein uplink OAM mode information corresponding to at least one third terminal device adjacent to the first terminal device in the first cell and the uplink OAM mode information corresponding to the first terminal device form a first set, and the uplink OAM mode information corresponding to the at least one second terminal device forms a second set; or downlink OAM mode information corresponding to at least one third terminal device and the downlink OAM mode information corresponding to the first terminal device form a first set, and the downlink OAM mode information corresponding to the at least one second terminal device forms a second set, wherein
the OAM mode information in the first set is consecutive; or
the OAM mode information in the first set is discrete; or
the OAM mode information in the first set is partially consecutive and partially discrete.

11. The method according to claim 9, wherein the uplink OAM mode information corresponding to the first terminal device is different from the downlink OAM mode information corresponding to the at least one second terminal device, and the downlink OAM mode information corresponding to the first terminal device is different from the uplink OAM mode information corresponding to the at least one second terminal device.

12. The method according to claim 11, wherein uplink OAM mode information corresponding to at least one third terminal device adjacent to the first terminal device in the first cell and the uplink OAM mode information corresponding to the first terminal device form a first set, and the downlink OAM mode information corresponding to the at least one second terminal device forms a second set; or downlink OAM mode information corresponding to at least one third terminal device and the downlink OAM mode information corresponding to the first terminal device form a first set, and the uplink OAM mode information corresponding to the at least one second terminal device forms a second set, wherein
the OAM mode information in the first set is consecutive; or
the OAM mode information in the first set is discrete; or
the OAM mode information in the first set is partially consecutive and partially discrete.

13. The method according to claim 10 or 12, wherein when there are a plurality of intervals between adjacent OAM mode information in the first set, the plurality of intervals are the same; or
the plurality of intervals are different; or
the plurality of intervals are partially the same and partially different.

14. The method according to claim 10 or 12, wherein when the OAM mode information in the first set is consecutive and the OAM mode information in the second set is consecutive, an interval between the first set and the second set is greater than or equal to a preset interval.

15. The method according to claim 10 or any one of claims 12 to 14, wherein the first set is a subset of a third set, and the third set is a set of uplink OAM mode information or downlink OAM mode information corresponding to edge terminal devices in the first cell.

16. The method according to claim 15, wherein the third set is a subset of a set of uplink OAM mode information supported by the first cell, or the third set is a subset of a set of downlink OAM mode information supported by the first cell.

17. A communication apparatus, comprising:
an obtaining module, configured to obtain uplink OAM mode information and/or downlink OAM mode information; and
a transceiver module, configured to send uplink data based on an uplink OAM mode corresponding to the uplink OAM mode information, and/or receive downlink data based on a downlink OAM mode corresponding to the downlink OAM mode information, wherein
the uplink OAM mode information corresponding to the communication apparatus is different from uplink OAM mode information corresponding to at least one second terminal device, the downlink OAM mode information corresponding to the communication apparatus is different from downlink OAM mode information corresponding to the at least one second terminal device, the communication apparatus is in a first cell, the at least one second terminal device is in a second cell, and the communication apparatus is adjacent to the at least one second terminal device.

18. The communication apparatus according to claim 17, wherein uplink OAM mode information corresponding to at least one third terminal device adjacent to the communication apparatus in the first cell and the uplink OAM mode information corresponding to the communication apparatus form a first set, and the uplink OAM mode information corresponding to the at least one second terminal device forms a second set; or downlink OAM mode information corresponding to at least one third terminal device and the downlink OAM mode information corresponding to the communication apparatus form a first set, and the downlink OAM mode information corresponding to the at least one second terminal device forms a second set, wherein
the OAM mode information in the first set is consecutive; or
the OAM mode information in the first set is discrete; or
the OAM mode information in the first set is partially consecutive and partially discrete.

19. The communication apparatus according to claim 17, wherein the uplink OAM mode information corresponding to the communication apparatus is different from the downlink OAM mode information corresponding to the at least one second terminal device, and the downlink OAM mode information corresponding to the communication apparatus is different from the uplink OAM mode information corresponding to the at least one second terminal device.

20. The communication apparatus according to claim 19, wherein uplink OAM mode information corresponding to at least one third terminal device adjacent to the communication apparatus in the first cell and the uplink OAM mode information corresponding to the communication apparatus form a first set, and the downlink OAM mode information corresponding to the at least one second terminal device forms a second set; or downlink OAM mode information corresponding to at least one third terminal device and the downlink OAM mode information corresponding to the communication apparatus form a first set, and the uplink OAM mode information corresponding to the at least one second terminal device forms a second set, wherein
the OAM mode information in the first set is consecutive; or
the OAM mode information in the first set is discrete; or
the OAM mode information in the first set is partially consecutive and partially discrete.

21. The communication apparatus according to claim 18 or 20, wherein when there are a plurality of intervals between adjacent OAM mode information in the first set, the plurality of intervals are the same; or
the plurality of intervals are different; or
the plurality of intervals are partially the same and partially different.

22. The communication apparatus according to claim 18 or 20, wherein when the OAM mode information in the first set is consecutive, and the OAM mode information in the second set is consecutive, an interval between the first set and the second set is greater than or equal to a preset interval.

23. The communication apparatus according to claim 18 or any one of claims 20 to 22, wherein the first set is a subset of a third set, and the third set is a set of uplink OAM mode information or downlink OAM mode information corresponding to edge terminal devices in the first cell.

24. The communication apparatus according to claim 23, wherein the third set is a subset of a set of uplink OAM mode information supported by the first cell, or the third set is a subset of a set of downlink OAM mode information supported by the first cell.

25. A communication apparatus, comprising:
an obtaining module, configured to obtain uplink OAM mode information and/or downlink OAM mode information corresponding to a first terminal device; and
a sending module, configured to send, to the first terminal device, the uplink OAM mode information and/or the downlink OAM mode information corresponding to the first terminal device, wherein the uplink OAM mode information corresponding to the first terminal device is used by the first terminal device to send uplink data, and the downlink OAM mode information corresponding to the first terminal device is used by the first terminal device to receive downlink data, wherein
the uplink OAM mode information corresponding to the first terminal device is different from uplink OAM mode information corresponding to at least one second terminal device, the downlink OAM mode information corresponding to the first terminal device is different from downlink OAM mode information corresponding to the at least one second terminal device, the first terminal device is in a first cell, the at least one second terminal device is in a second cell, and the first terminal device is adjacent to the at least one second terminal device.

26. The communication apparatus according to claim 25, wherein uplink OAM mode information corresponding to at least one third terminal device adjacent to the first terminal device in the first cell and the uplink OAM mode information corresponding to the first terminal device form a first set, and the uplink OAM mode information corresponding to the at least one second terminal device forms a second set; or downlink OAM mode information corresponding to at least one third terminal device and the downlink OAM mode information corresponding to the first terminal device form a first set, and the downlink OAM mode information corresponding to the at least one second terminal device forms a second set, wherein
the OAM mode information in the first set is consecutive; or
the OAM mode information in the first set is discrete; or
the OAM mode information in the first set is partially consecutive and partially discrete.

27. The communication apparatus according to claim 25, wherein the uplink OAM mode information corresponding to the first terminal device is different from the downlink OAM mode information corresponding to the at least one second terminal device, and the downlink OAM mode information corresponding to the first terminal device is different from the uplink OAM mode information corresponding to the at least one second terminal device.

28. The communication apparatus according to claim 27, wherein uplink OAM mode information corresponding to at least one third terminal device adjacent to the first terminal device in the first cell and the uplink OAM mode information corresponding to the first terminal device form a first set, and the downlink OAM mode information corresponding to the at least one second terminal device forms a second set; or downlink OAM mode information corresponding to at least one third terminal device and the downlink OAM mode information corresponding to the first terminal device form a first set, and the uplink OAM mode information corresponding to the at least one second terminal device forms a second set, wherein
the OAM mode information in the first set is consecutive; or
the OAM mode information in the first set is discrete; or
the OAM mode information in the first set is partially consecutive and partially discrete.

29. The communication apparatus according to claim 26 or 28, wherein when there are a plurality of intervals between adjacent OAM mode information in the first set, the plurality of intervals are the same; or
the plurality of intervals are different; or
the plurality of intervals are partially the same and partially different.

30. The communication apparatus according to claim 26 or 28, wherein when the OAM mode information in the first set is consecutive and the OAM mode information in the second set is consecutive, an interval between the first set and the second set is greater than or equal to a preset interval.

31. The communication apparatus according to claim 26 or any one of claims 28 to 30, wherein the first set is a subset of a third set, and the third set is a set of uplink OAM mode information or downlink OAM mode information corresponding to edge terminal devices in the first cell.

32. The communication apparatus according to claim 31, wherein the third set is a subset of a set of uplink OAM mode information supported by the first cell, or the third set is a subset of a set of downlink OAM mode information supported by the first cell.

33. A communication apparatus, comprising a processor and a transceiver, wherein the processor and the transceiver communicate with each other through an internal connection, and the processor is configured to perform the method according to any one of claims 1 to 8 or claims 9 to 16.

34. A communication apparatus, comprising:
an interface and a processor, wherein the interface is coupled to the processor; and
the processor is configured to execute a computer program or instructions, so that the communication apparatus performs the method according to any one of claims 1 to 8 or claims 9 to 16.

35. The communication apparatus according to claim 34, wherein the communication apparatus further comprises a memory, wherein
the memory is configured to store the computer program or the instructions.

36. A communication apparatus, comprising an input interface circuit, a logic circuit, and an output interface circuit, wherein the input interface circuit is configured to obtain to-be-processed data;
the logic circuit is configured to perform the method according to any one of claims 1 to 8 or claims 9 to 16 to process the to-be-processed data, to obtain processed data; and
the output interface circuit is configured to output the processed data.

37. A computer-readable storage medium, comprising a computer program or instructions, wherein when the computer program or the instructions is/are run on a computer, the method according to any one of claims 1 to 8 or claims 9 to 16 is performed.

38. A computer program product, comprising a computer program or instructions, wherein when the computer program or the instruction is/are run on a computer, the method according to any one of claims 1 to 8 or claims 9 to 16 is performed.
